(19) Europäisches Patentamt / European Patent Office / Office européen des brevets

(11) **EP 3 128 594 B1**

(12) **EUROPEAN PATENT SPECIFICATION**

(45) Date of publication and mention of the grant of the patent:
**31.07.2019 Bulletin 2019/31**

(21) Application number: **15772352.9**

(22) Date of filing: **30.01.2015**

(51) Int Cl.:
*H01M 10/0525* (2010.01)     *H01M 2/02* (2006.01)
*H01M 2/10* (2006.01)     *H01M 4/48* (2010.01)
*H01M 4/485* (2010.01)     *H01M 4/505* (2010.01)
*H01M 4/58* (2010.01)     *H01M 10/0585* (2010.01)
*H01M 10/0587* (2010.01)     *H01M 10/42* (2006.01)

(86) International application number:
**PCT/JP2015/000421**

(87) International publication number:
**WO 2015/151375 (08.10.2015 Gazette 2015/40)**

(54) **SECONDARY BATTERY, BATTERY PACK, ELECTRONIC DEVICE, ELECTRIC VEHICLE, ELECTRICITY-STORAGE APPARATUS, AND ELECTRICAL POWER SYSTEM**

SEKUNDÄRBATTERIE, BATTERIEPACK, ELEKTRONISCHE VORRICHTUNG, ELEKTROFAHRZEUG, ENERGIESPEICHERVORRICHTUNG UND STROMSYSTEM

BATTERIE RECHARGEABLE, BLOC-BATTERIE, DISPOSITIF ÉLECTRONIQUE, VÉHICULE ÉLECTRIQUE, DISPOSITIF DE STOCKAGE D'ÉLECTRICITÉ, ET SYSTÈME D'ALIMENTATION ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.04.2014 JP 2014077106**

(43) Date of publication of application:
**08.02.2017 Bulletin 2017/06**

(73) Proprietor: **Murata Manufacturing Co., Ltd. Nagaokakyo-shi, Kyoto 617-8555 (JP)**

(72) Inventors:
- **SAKAMOTO, Takuma**
  **Koriyama-shi**
  **Fukushima 963-0531 (JP)**
- **ASAKAWA, Yuichiro**
  **Koriyama-shi**
  **Fukushima 963-0531 (JP)**
- **TAKAHASHI, Sho**
  **Koriyama-shi**
  **Fukushima 963-0531 (JP)**

(74) Representative: **Witte, Weller & Partner Patentanwälte mbB Postfach 10 54 62 70047 Stuttgart (DE)**

(56) References cited:
EP-A1- 2 337 123     EP-A2- 2 306 558
WO-A1-2012/145796     JP-A- 2001 210 324
JP-A- 2007 294 164     JP-A- 2011 091 039
JP-A- 2011 113 961     JP-A- 2012 033 279
US-A1- 2010 171 466     US-A1- 2012 208 087

- **R. BERNHARD ET AL: "On-Line Electrochemical Mass Spectrometry Investigations on the Gassing Behavior of Li4Ti5O12 Electrodes and Its Origins", JOURNAL OF THE ELECTROCHEMICAL SOCIETY, vol. 161, no. 4, 24 January 2014 (2014-01-24), pages A497-A505, XP055390690, US ISSN: 0013-4651, DOI: 10.1149/2.013404jes**

**EP 3 128 594 B1**

**Description**

TECHNICAL FIELD

The present technology relates to a secondary battery, a battery pack, an electronic device, an electrically driven vehicle, a storage device, and a power system.

BACKGROUND ART

Secondary batteries such as lithium ion secondary batteries have increasing demands of improvement of performance, and are expected to improve battery characteristics such as high capacity and high output.
As a negative electrode material used for negative electrodes of the secondary batteries, a high-potential negative electrode material such as lithium titanate ($Li_4Ti_5O_{12}$) is used, other than the conventional carbon-based negative electrode materials. In recent years, development of the secondary batteries using the high-potential negative electrode material and the like has been actively in progress .
Patent Documents 1 to 5 below disclose technologies related to the secondary batteries.

CITATION LIST

PATENT DOCUMENT

Patent Document 1: Japanese Patent Application Laid-Open No. 2011-91039
Patent Document 2: Japanese Patent Application Laid-Open No. 2011-113961
Patent Document 3: Japanese Patent No. 5191232
Patent Document 4: Japanese Patent Application Laid-Open No. 2013-16522
Patent Document 5: International Publication No. 2011/145301

SUMMARY OF THE INVENTION

PROBLEMS TO BE SOLVED BY THE INVENTION

Secondary batteries are required to suppress generation of gasses and deterioration of cycle characteristics.
Therefore, an objective of the present technology is to provide a secondary battery, a battery pack, an electronic device, an electrically driven vehicle, a storage device, and a power system that can suppress generation of gasses and deterioration of cycle characteristics.

SOLUTIONS TO PROBLEMS

To solve the above-described problem, the present technology is a secondary battery including a positive electrode including a positive electrode active material layer having a positive electrode active material, a negative electrode including a negative electrode active material layer having a negative electrode active material, and an electrolyte, wherein the positive electrode active material contains at least either a lithium iron phosphate compound having an olivine structure and containing at least lithium, iron, and phosphorus, or lithium-manganese composite oxide having a spinel structure and containing at least lithium and manganese, the negative electrode active material contains titanium-containing inorganic oxide, and the secondary battery satisfies Formula (A), Formula (B), and Formula (C) below:

$$\text{Formula (A)}$$
$$1.005 \leq (Ac/Aa)$$

(in the formula, Ac: an electrode area ($cm^2$) of the positive electrode and Aa: an electrode area ($cm^2$) of the negative electrode);

$$\text{Formula (B)}$$
$$(Ac/Aa) < (Q_{A1}/Q_{C1})$$

(in the formula, $Q_{C1}$ (mAh/cm$^2$): a first positive electrode charge capacity per unit area and $Q_{A1}$ (mAh/cm$^2$): a first negative electrode charge capacity per unit area); and

$$\text{Formula (C)}$$
$$0.90 \leq (Q_{CL}/Q_{AL}) \leq 1.10$$

(in the formula, $Q_{CL}$ (mAh/cm$^2$): an irreversible capacity per unit area of the positive electrode and $Q_{AL}$ (mAh/cm$^2$): an irreversible capacity per unit area of the negative electrode) . $Q_{CL}$ and $Q_{AL}$, are measured using a coin cell having a Li metal counter electrode.

A secondary battery may be provided, the battery including a positive electrode including a positive electrode active material layer having a positive electrode active material, a negative electrode including a negative electrode active material layer containing a negative electrode active material, and an electrolyte, wherein a curve indicating change of a potential with respect to a capacity (V vs. Li/Li$^+$), of the positive electrode active material, has at least a plateau region and a potential rising region in which the potential drastically rises and changes in a charge end stage, the negative electrode active material contains titanium-containing inorganic oxide, and the secondary battery satisfies Formula (A), Formula (B), and Formula (C) below:

$$\text{Formula (A)}$$
$$1.005 \leq (Ac/Aa)$$

(in the formula, Ac: an electrode area (cm$^2$) of the positive electrode and Aa: an electrode area (cm$^2$) of the negative electrode);

$$\text{Formula (B)}$$
$$(Ac/Aa) < (Q_{A1}/Q_{C1})$$

(in the formula, $Q_{C1}$ (mAh/cm$^2$): a first positive electrode charge capacity per unit area and $Q_{A1}$ (mAh/cm$^2$): a first negative electrode charge capacity per unit area); and

$$\text{Formula (C)}$$
$$0.90 \leq (Q_{CL}/Q_{AL}) \leq 1.10$$

(in the formula, $Q_{CL}$ (mAh/cm$^2$): an irreversible capacity per unit area of the positive electrode and $Q_{AL}$ (mAh/cm$^2$): an irreversible capacity per unit area of the negative electrode). $Q_{CL}$ and $Q_{AL}$ are measured using a coin cell having a Li metal counter electrode.

A battery pack, an electronic device, an electrically driven vehicle, a storage device, and a power system of the present technology include the above-described secondary battery.

EFFECTS OF THE INVENTION

According to the present technology, generation of gasses and deterioration of cycle characteristics can be suppressed.

BRIEF DESCRIPTION OF DRAWINGS

Fig. 1A is a schematic wiring diagram illustrating an appearance of a secondary battery. Fig. 1B is a schematic wiring diagram illustrating a configuration example of the secondary battery. Fig. 1C is a schematic wiring diagram illustrating a bottom surface side of the appearance of the secondary battery.

Figs. 2A and 2B are side views of a battery element packaged with a packaging material.

Fig. 3A is a perspective view illustrating a configuration example of a positive electrode. Fig. 3B is a perspective view illustrating a configuration example of a negative electrode.

Fig. 4A is a schematic sectional view illustrating a part of a configuration of a battery element. Fig. 4B is a schematic plan view illustrating a configuration of battery composition.

Fig. 5A is a graph illustrating an example of potential change of a positive electrode and a negative electrode with respect to a capacity. Fig. 5B is a graph illustrating an example of potential change of a positive electrode and a negative electrode with respect to a capacity. Fig. 5C is a graph illustrating an example of potential change of a positive electrode and a negative electrode with respect to a capacity.

Fig. 6A is a schematic wiring diagram illustrating an appearance of a secondary battery. Fig. 6B is a schematic wiring diagram illustrating a configuration example of the secondary battery. Fig. 6C is a schematic wiring diagram illustrating a bottom surface side of the appearance of the secondary battery. Fig. 6D is a side view of a battery element packaged with a packaging material.

Fig. 7A is a configuration example of a positive electrode that configures the battery element. Fig. 7B is a configuration example of a negative electrode that configures the battery element.

Fig. 8 is an exploded perspective view of a secondary battery that accommodates a wound electrode body.

Fig. 9 is a diagram illustrating a section structure of a wound electrode body 50 illustrated in Fig. 8 along the I-I line.

Fig. 10 is a sectional view of a configuration example of a secondary battery.

Fig. 11 is a diagram illustrating an enlarged part of a wound electrode body 90 illustrated in Fig. 10.

Fig. 12 is an exploded perspective view illustrating a configuration example of a simplified battery pack.

Fig. 13A is a schematic perspective view illustrating an appearance of the simplified battery pack, and Fig. 13B is a schematic perspective view illustrating the appearance of the simplified battery pack.

Fig. 14 is a block diagram illustrating a circuit configuration example in a case where a secondary battery of the present technology is applied to a battery pack.

Fig. 15 is a schematic view illustrating an example of a storage system for houses to which the present technology is applied.

Fig. 16 is a schematic view schematically illustrating a configuration of a hybrid vehicle that employs a series hybrid system to which the present technology is applied.

MODE FOR CARRYING OUT THE INVENTION

(Outline of Present Technology)

First, to facilitate understanding of the present technology, an outline of the present technology will be described. The so-called carbon-based negative electrode material has a problem in large current charge and low-temperature charge. Meanwhile, if the high-potential negative electrode material such as lithium titanate ($Li_4Ti_5O_{12}$) is used for a negative electrode, negative electrode potential is higher than Li deposition potential, and thus Li deposition is less likely to occur and the negative electrode is not deteriorated. Therefore, if lithium titanate ($Li_4Ti_5O_{12}$) is used for the negative electrode, the negative electrode is not deteriorated even if an electrode area of the negative electrode is made smaller than an electrode area of a positive electrode, and a significant decrease in safety can be suppressed.

Further, in a case where an electrode that defines a charge capacity is the positive electrode, if the area of the positive electrode is smaller than the area of the negative electrode, Li is consumed in clearance between the positive electrode and the negative electrode that is a counter electrode, and thus the capacity is decreased during a cycle. Therefore, to avoid the decrease in the capacity during a cycle, the area of the positive electrode may just be made larger than the area of the negative electrode.

Further, when a cell is assembled in a combination where a positive electrode capacity exceeds a negative electrode capacity, charge is defined by the negative electrode. That is, charge termination is defined by drastic voltage change (voltage drop) in a charge end stage of the negative electrode. As a result, it has been found that the negative electrode potential drops, and a large amount of gas is generated.

The inventors of the present patent application have diligently studied on the basis of the above knowledge, and have found that making the area of the positive electrode larger than the area of the negative electrode can suppress the decrease in the capacity in a cycle. Further, the inventors have found that, to define the charge by the positive electrode (that is, to define the charge termination by the voltage change in the charge end stage of the positive electrode), the negative electrode needs to maintain a large capacity on a constant basis. Accordingly, the inventors have found that avoidance of the potential drop of the negative electrode can suppress the generation of gasses and the like.

In secondary batteries using the high-potential negative electrode material such as lithium titanate ($Li_4Ti_5O_{12}$) as the negative electrode material, a magnitude correlation of the negative electrode area has been examined. However, capacity balance between the positive electrode and the negative electrode is not defined. Defining of both of the electrode areas and the capacity balance is important. Defining both of the electrode areas and the capacity balance can achieve a battery with characteristics that are not deteriorated over a long period of time.

Differences between Patent Documents 1 to 5 described above and the present technology will be described. For example, the secondary battery described in Patent Document 1 (Japanese Patent Application Laid-Open No.

2011-91039) defines the charge by the negative electrode, and thus cannot suppress the generation of gasses.

Patent Document 2 (Japanese Patent Application Laid-Open No. 2011-113961) describes making the area of the positive electrode larger than the area of the negative electrode. However, Patent Document 2 is silent about defining both of the electrode areas and the capacity balance .

Patent Document 3 (Japanese Patent No. 5191232) and Patent Document 4 (Japanese Patent Application Laid-Open No. 2013-16522) describe that an electrode capacity ratio (the positive electrode capacity/the negative electrode capacity) is 1 or more. However, when the electrode capacity ratio (the positive electrode capacity/the negative electrode capacity) is 1, the charge is subject to influence of both of the positive electrode and the negative electrode, and the negative electrode potential drops and the generation of gasses may be caused. When the electrode capacity ratio exceeds 1, the charge is defined by the negative electrode, and thus the negative electrode potential drops and the generation of gasses may be caused.

Patent Document 5 (International Publication No. 2011/145301) describes a lithium secondary battery using nickel-based lithium-containing composite oxide as the positive electrode active material, and using a graphite material as the negative electrode active material. In the case where the graphite material is used as the negative electrode active material in this lithium secondary battery, defining the positive electrode potential and the negative electrode potential at the time of discharge can suppress deterioration in overdischarge and can achieve long-life of the battery. However, in a case where a non-carbon-based material is used as the negative electrode active material in this lithium secondary battery, the positive electrode potential and the negative electrode potential at the time of discharge are not defined. Further, in this lithium secondary battery, discharge is terminated by a potential rise in a discharge end stage of the negative electrode. However, the discharge end stage is imposed on the potential of one electrode, the potential change becomes large and may reach a potential at which an electrolyte solution is decomposed. In contrast, in the secondary battery of the present technology, voltage change in the discharge end stage is imposed on both electrodes. Therefore, the potential does not reach the electrolyte solution decomposition potential, and actual use voltage at the time of discharge can be decreased, in addition to achievement of long-term cycle stability. Therefore, an output can be improved.

Hereinafter, embodiments of the present technology will be described with reference to the drawings. Note that description will be given in the following order.

1. First Embodiment (Example of Secondary Battery)
2. Second Embodiment (Example of Secondary Battery)
3. Third Embodiment (Example of Secondary Battery)
4. Fourth Embodiment (Example of Secondary Battery)
5. Fifth Embodiment (Example of Battery Pack)
6. Sixth Embodiment (Example of Battery Pack)
7. Seventh Embodiment (Example of Storage System and the like)
8. Other Embodiments (Modifications)

Note that the embodiments described below are favorable concrete examples of the present technology, and the content of the present technology is not limited by these embodiments . Further, the effects described in the present specification are merely examples and are not limited, and do not deny existence of effect different from the exemplarily described effect.

1. First Embodiment

(1-1) Configuration Example of Secondary Battery

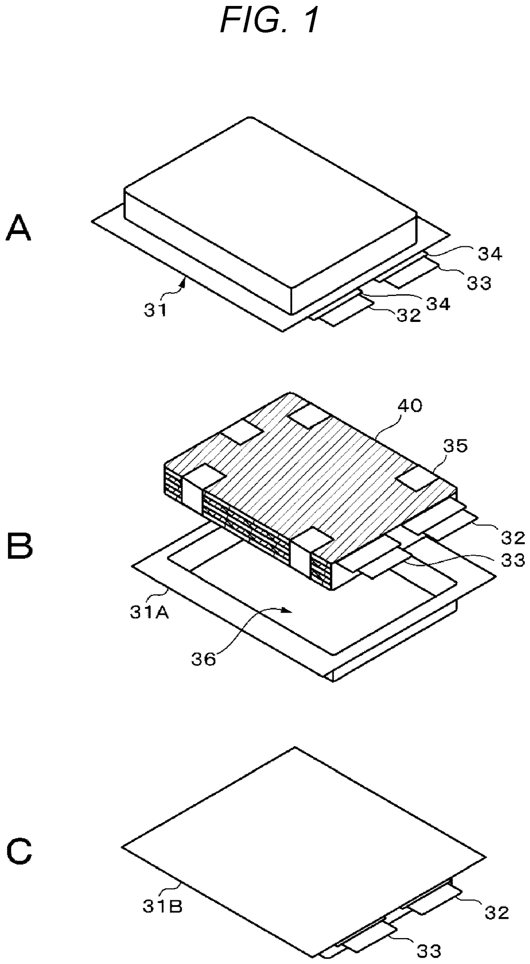

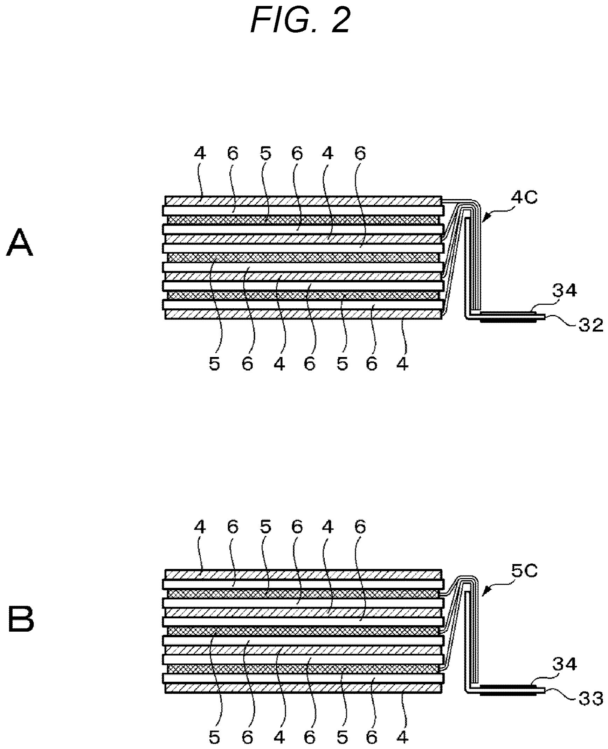

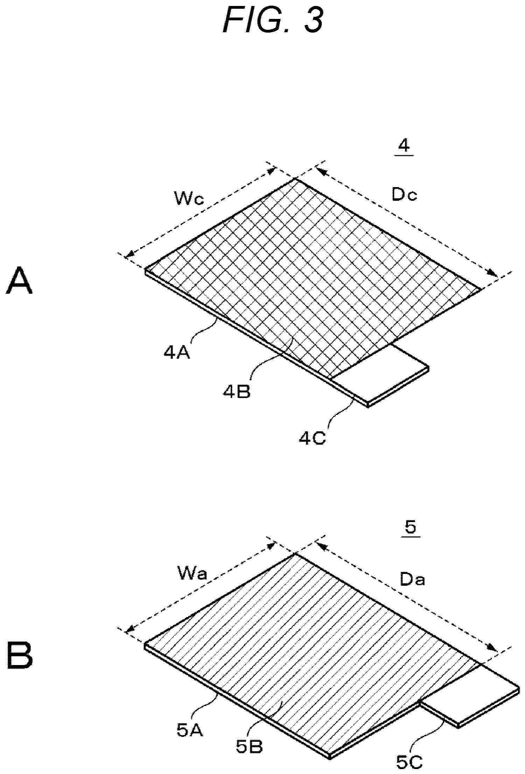

A secondary battery according to a first embodiment of the present technology will be described. Fig. 1A is a schematic wiring diagram illustrating an appearance of a secondary battery according to the first embodiment of the present technology, and Fig. 1B is a schematic wiring diagram illustrating a configuration example of the secondary battery. Note that Fig. 1B illustrates a configuration of a case where a bottom surface and a top surface of the secondary battery illustrated in Fig. 1A are inverted. Further, Fig. 1C is a schematic wiring diagram illustrating a bottom surface side of the appearance of the secondary battery. Figs. 2A and 2B are side views of a battery element packaged with a packaging material. Fig. 3A is a perspective view illustrating a configuration example of a positive electrode. Fig. 3B is a perspective view illustrating a configuration example of a negative electrode.

The secondary battery is, for example, a non-aqueous electrolyte secondary battery, and is a lithium ion secondary battery or the like. As illustrated in Figs. 1A to 1C and Figs. 2A to 2B, the secondary battery includes a battery element 40 and a packaging material 31. The battery element 40 is packaged with the packaging material 31. A positive electrode tub 32 and a negative electrode tub 33 respectively connected to positive electrode current collector exposed portions 4C and negative electrode current collector exposed portions 5C are pulled out of one side of a sealed portion of the packaging material 31 to an outside in the same direction. The positive electrode tub 32 and the negative electrode tub 33 are pulled out of the one side of the sealed portion of the packaging material 31 to the outside in the same direction.

Deep drawing, embossing, or the like is applied to at least one surface of the packaging material 31 in advance, so that a recessed portion 36 is formed. The battery element 40 is housed in the recessed portion 36. In Fig. 1B, the recessed portion 36 is formed in a first packaging portion 31A that configures the packaging material 31, and the battery element 40 is housed in the recessed portion 36. A second packaging portion 31B is then arranged to cover an opening of the recessed portion 36, and a periphery of the opening of the recessed portion 36 is glued and sealed by means of thermal fuse.

(Battery Element)

As illustrated in Figs. 2A and 2B, the battery element 40 has a laminated electrode structure in which approximately square positive electrodes 4 illustrated in Fig. 3A, and approximately square negative electrodes 5 illustrated in Fig. 3B and arranged to face the positive electrodes 4 are alternately laminated through separators 6. Note that, although not illustrated, the battery element 40 may include an electrolyte. In this case, for example, in the battery element 40, the electrolyte (electrolyte layer) may be formed at least between the positive electrode 4 and the separator 6 or between the negative electrode 5 and the separator 6. The electrolyte is prepared such that an electrolyte solution is held in a high molecular compound, for example, and is a gel electrolyte or the like. Note that, in a case where the electrolyte solution that is a liquid electrolyte is used as the electrolyte, the electrolyte layer is not formed, and the battery element 40 is impregnated with the electrolyte solution filled in the packaging material 31.

The plurality of positive electrodes 4 and the positive electrode current collector exposed portions 4C respectively electrically connected thereto, and the plurality of negative electrodes 5 and the negative electrode current collector exposed portions 5C respectively electrically connected thereto are pulled out of the battery element 40.

The positive electrode current collector exposed portions 4C formed of a plurality of layers are bent to form an approximately U shape in cross-section in a state of having an appropriate slack in the bent portion. The positive electrode tub 32 is connected to tip portions of the positive electrode current collector exposed portions 4C formed of a plurality of layers by a method such as ultrasonic welding or resistance welding.

As the positive electrode tub 32 connected to the positive electrode current collector exposed portions 4C, a metal lead body made of aluminum (Al) or the like can be used, for example.

Note that an adhesive film 34 for improving adhesion between the packaging material 31 and the positive electrode tub 32 is provided in a portion of the positive electrode tub 32. The adhesive film 34 is configured from a resin material having high adhesion with metal material. In a case where the positive electrode tub 32 is configured from the above metal material, for example, the adhesive film 34 is favorably configured from a polyolefin resin such as polyethylene, polypropylene, modified polyethylene, or modified polypropylene.

Similarly to the positive electrode 4, the negative electrode current collector exposed portions 5C formed of a plurality of layers are bent to form an approximately U shape in cross-section in a state of having an appropriate slack in the bent portion . The negative electrode tub 33 is connected to tip portions of the negative electrode current collector exposed portions 5C formed of a plurality of layers by a method such as ultrasonic welding or resistance welding.

As the negative electrode tub 33 connected to the negative electrode current collector exposed portions 5C, a metal lead body made of nickel (Ni) or the like can be used, for example.

An adhesive film 34 for improving adhesion between the packaging material 31 and the negative electrode tub 33 is provided in a portion of the negative electrode tub 33, similarly to the positive electrode tub 32.

(Positive Electrode)

As illustrated in Fig. 3A, the positive electrode 4 has a structure in which a positive electrode active material layer 4B is provided on both surfaces of a positive electrode current collector 4A. Note that, although not illustrated, the positive electrode active material layer 4B may be provided only on one surface of the positive electrode current collector 4A. As the positive electrode current collector 4A, for example, metal foil such as aluminum (Al) foil, nickel (Ni) foil, or stainless (SUS) foil is used.

Further, the positive electrode current collector exposed portions 4C integrally extend from the positive electrode current collector 4A. As described above, the positive electrode current collector exposed portions 4C formed of a plurality of layers are bent to have an approximately U shape in cross-section, and the tip portions are connected with the positive electrode tub 32 by the method such as ultrasonic welding or resistance welding.

The positive electrode active material layer 4B is formed on a square principal plane portion of the positive electrode current collector 4A. The positive electrode current collector exposed portions 4C in a state where the positive electrode current collector 4A is exposed play a role as a positive electrode terminal. The width of the positive electrode current collector exposed portion 4C can be arbitrarily set. Especially, in a case where the positive electrode tub 32 and the negative electrode tub 33 are pulled out of the same side, like the first embodiment, the width of the positive electrode current collector exposed portion 4C is favorably less than 50% of the width of the positive electrode 4. Such a positive electrode 4 is obtained such that the positive electrode current collector exposed portions 4C are provided to one side of the square positive electrode current collector 4A and the positive electrode active material layer 4B is formed, and an unnecessary portion is cut. Note that the positive electrode current collector 4A and the positive electrode current collector exposed portions 4C that function as a positive electrode terminal may be separately formed and connected.

(Positive Electrode Active Material Layer)

The positive electrode active material layer 4B contains a positive electrode material that can store/discharge lithium as a positive electrode active material, for example. The positive electrode active material layer 4B may contain other materials such as a binding agent and a conducting agent, as needed. As the positive electrode active material, one type or two or more types of positive electrode materials may be used.

(Positive Electrode Material)

As the positive electrode material that can store/discharge lithium, a positive electrode active material in which a curve that indicates change of a potential with respect to a capacity (V vs. $Li/Li^+$) has at least a plateau region where the potential is approximately constant and a potential rising region where the potential drastically rises and changes in a charge end stage is used. As such a positive electrode active material, at least either a lithium iron phosphate compound having an olivine structure or lithium-manganese composite oxide having a spinel structure can be used.
The lithium iron phosphate compound having an olivine structure is a lithium iron phosphate compound having an olivine structure, and contains at least lithium, iron, and phosphorus.
The lithium-manganese composite oxide having a spinel structure is lithium-manganese composite oxide having a spinel structure, and contains at least lithium and manganese.
An example of the lithium iron phosphate compound having an olivine structure includes a phosphate compound expressed by a (Chemical Formula 1):

$$\text{(Chemical Formula 1)} \qquad Li_uFe_rM1_{(1-r)}PO_4$$

(in the formula, M1 expresses at least one type of a group composed of cobalt (Co), manganese (Mn), nickel (Ni), magnesium (Mg), aluminum (Al), boron (B), titanium (Ti), vanadium (V), niobium (Nb), copper (Cu), zinc (Zn), molybdenum (Mo), calcium (Ca), strontium (Sr), tungsten (W), and zirconium (Zr). r is a value in a range of $0 < r \leq 1$. u is a value in a range of $0.9 \leq u \leq 1.1$. Note that a composition of lithium differs depending on a state of charge and discharge, and the value of u expresses a value in a fully discharged state).
Examples of the lithium phosphate compound expressed by the (Chemical Formula 1) typically include $Li_uFePO_4$ (u is synonymous with the aforementioned u) and $Li_uFe_rMn_{(1-r)}PO_4$ (u is synonymous with the aforementioned u. r is synonymous with the aforementioned r).
An example of the lithium-manganese composite oxide having a spinel structure includes a lithium composite oxide expressed by a (Chemical Formula 2):

$$\text{(Chemical Formula 2)} \qquad Li_vMn_{(2-w)}M2_wO_s$$

(in the formula, M2 expresses at least one type of a group composed of cobalt (Co), nickel (Ni), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), and tungsten (W). v, w, and s are values in ranges of $0.9 \leq v \leq 1.1$, $0 \leq w \leq 0.6$, and $3.7 \leq s \leq 4.1$. Note that a composition of lithium differs depending on a state of charge and discharge, and the value of v expresses a value in a fully discharged state).
An example of the lithium composite oxide expressed by the (Chemical Formula 2) is, to be specific, $Li_vMn_2O_4$ (v is synonymous with the aforementioned v).
The lithium iron phosphate compound having an olivine structure and the lithium-manganese composite oxide having a spinel structure may be coated with a carbon material or the like.

(Conducting Agent)

As the conducting agent, for example, a carbon material such as carbon black or graphite is used.

(Binding Agent)

As the binding agent, at least one type selected from resin materials such as polyvinylidene fluoride (PVdF), polytetrafluoroethylene (PTFE), polyacrylonitrile (PAN), styrene-butadiene rubber (SBR), and carboxymethyl cellulose (CMC), and copolymers having the aforementioned resin materials as a main material is used.

(Negative Electrode)

As illustrated in Fig. 3B, the negative electrode 5 has a structure in which the negative electrode active material layer 5B is provided on both surface of the negative electrode current collector 5A. Note that, although not illustrated, the negative electrode active material layer 5B may be provided on only one surface of the negative electrode current collector 5A. The negative electrode current collector 5A is configured from, for example, metal foil such as copper (Cu) foil, nickel (Ni) foil, or stainless (SUS) foil. The negative electrode current collector exposed portions 5C integrally extend from the negative electrode current collector 5A. The negative electrode current collector exposed portions 5C formed of a plurality of layers are bent to have an approximately U shape in cross-section, and the tip portions are connected with the negative electrode tub 33 by the method such as ultrasonic welding or resistance welding.

The negative electrode active material layer 5B is formed on a square principal plane portion of the negative electrode current collector 5A. The negative electrode current collector exposed portions 5C in a state where the negative electrode current collector 5A is exposed play a role as a negative electrode terminal. The width of the negative electrode current collector exposed portion 5C can be arbitrarily set. Especially, in a case where the positive electrode tub 32 and the negative electrode tub 33 are pulled out of the same side, like the first embodiment, the width of the negative electrode current collector exposed portion 5C is favorably less than 50% of the width of the negative electrode 5. Such as a negative electrode 5 is obtained such that the negative electrode current collector exposed portions 5C are provided to one side of the square negative electrode current collector 5A and the negative electrode active material layer 5B is formed, and an unnecessary portion is cut. Note that the negative electrode current collector 5A and the negative electrode current collector exposed portions 5C that function as a negative electrode terminal may be separately formed and connected.

(Negative Electrode Active Material Layer)

The negative electrode active material layer 5B contains one type, or two or more types of the negative electrode materials that can store/discharge lithium as the negative electrode active material, and may contain other materials such as a binding agent and a conducting agent similar to those of the positive electrode active material layer 4B, as needed.

As the negative electrode material that can store/discharge lithium, titanium-containing inorganic oxide containing at least titanium (Ti) and oxygen as configuration elements can be used. Examples of the titanium-containing inorganic oxide include titanium-containing lithium composite oxide and titanium-containing oxide. Note that the titanium-containing inorganic oxide may be doped with a heteroelement such as a dissimilar metallic element other than Ti to improve conductivity.

The titanium-containing lithium composite oxide is one type, or two or more types of the titanium-containing lithium composite oxides expressed by following (Chemical Formula 3) to (Chemical Formula 5):

$$\text{(Chemical Formula 3)} \qquad \text{Li[Li}_x\text{M3}_{(1-3x)/2}\text{Ti}_{(3+x)/2}]\text{O}_4$$

(M3 is at least one type of Mg, Ca, Cu, Zn, and Sr, and x satisfies $0 \leq x \leq 1/3$) .

$$\text{(Chemical Formula 4)} \qquad \text{Li[Li}_y\text{M4}_{1-3y}\text{Ti}_{1+2y}]\text{O}_4$$

(M4 is at least one type of Al, Sc, Cr, Mn, Fe, Ga, and Y, and y satisfies $0 \leq y \leq 1/3$).

$$\text{(Chemical Formula 5)} \qquad \text{Li [Li}_{1/3}\text{M5}_z\text{Ti}_{(5/3)-z}]\text{O}_4$$

(M5 is at least one type of V, Zr, and Nb, and z satisfies $0 \leq z \leq 2/3$).

The titanium-containing lithium composite oxide is an oxide containing another one type, or two or more types of metallic elements as the configuration elements, in addition to Li and Ti, and has a spinel crystal structure. Note that M3 in the (Chemical Formula 3) is a metallic element that can become a divalent ion, M4 in the (Chemical Formula 4) is a metallic element that can become a tervalent ion, and M5 in the (Chemical Formula 5) is a metallic element that can become a tetravalent ion.

The titanium-containing lithium composite oxide expressed by the (Chemical Formula 3) is not especially limited as long as the titanium-containing lithium composite oxide satisfies the chemical formula condition expressed by the (Chemical Formula 3). However, for example, $Li_4Ti_5O_{12}$ ($Li[Li_{1/3}Ti_{5/3}]O_4$) or $Li_{3.75}Ti_{4.875}Mg_{0.375}O_{12}$ can be used. The titanium-containing lithium composite oxide expressed by the (Chemical Formula 4) is not especially limited as long as the titanium-containing lithium composite oxide satisfies the chemical formula condition expressed by the (Chemical Formula 4). However, for example, $LiCrTiO_4$ can be used. The titanium-containing lithium composite oxide expressed by the (Chemical Formula 5) is not especially limited as long as the titanium-containing lithium composite oxide satisfies the chemical formula condition expressed by the (Chemical Formula 5). However, for example, $Li_4Ti_{4.95}Nb_{0.05}O_{12}$ can be used.

The titanium-containing oxide is an oxide containing Ti and oxygen. An example of the titanium-containing oxide includes $TiO_2$. $TiO_2$ may be rutile, anatase, or brookite titanium oxide.

Note that the titanium-containing inorganic oxide such as the titanium-containing lithium composite oxide may be coated with carbon. To be coated with carbon, a hydrocarbon or the like is decomposed using a chemical vapor deposition (CVD) method or the like, and a carbon film may just be grown on a surface of the titanium-containing lithium composite oxide.

(Separator)

The separator 6 is configured from an insulating thin film having large ion transmittance, and having predetermined mechanical strength. For example, the separator 6 is configured from a porous film made of a polyolefin-based resin material such as polypropylene (PP) or polyethylene (PE) or a porous film made of an inorganic material such as non-woven fabric. Note that the separator 6 may have a structure where the two or more types of porous films are laminated. Among them, the separator 6 having the polyolefin-based porous film such as polyethylene or polypropylene is excellent in separativeness between the positive electrode 4 and the negative electrode 5 and can further decrease internal short-circuit and an open-circuit voltage, and is thus favorable.

Note that the separator 6 may be a sheet separator, or maybe one sheet of beltlike separator folded in a zigzag manner . In a case of using the sheet separator, the battery element 40 has a structure in which the positive electrode 4 and the negative electrode 5 are laminated through the sheet separator . In a case of using the one sheet of beltlike separator folded in a zigzag manner, the battery element 40 has a structure in which the positive electrode 4 and the negative electrode 5 are laminated through the one sheet of beltlike separator folded in a zigzag manner or a structure in which the positive electrode 4 and the negative electrode 5 are laminated through a pair of separators 6 folded in a zigzag manner in a state of sandwiching the negative electrode 5.

(Electrolyte)

The electrolyte contains a high molecular compound, and a non-aqueous electrolyte (electrolyte solution) containing a solvent and an electrolyte salt. The electrolyte contains a gel electrolyte in which the non-aqueous electrolyte is held in the high molecular compound. For example, the high molecular compound is impregnated with the electrolyte solution and swells, and becomes so-called gel. In the electrolyte, for example, the gel high molecular compound itself that has absorbed and held the electrolyte solution functions as an ionic conductor. Note that the electrolyte may be an electrolyte solution that is a liquid electrolyte.

(Non-aqueous Electrolyte)

The non-aqueous electrolyte contains an electrolyte salt and a non-aqueous solvent that dissolves the electrolyte salt.

(Electrolyte Salt)

The electrolyte salt contains one type, or two or more types of light metal compounds such as a lithium salt. Examples of the lithium salt include lithium hexafluorophosphate ($LiPF_6$), lithium tetrafluoroborate ($LiBF_4$), lithium perchlorate ($LiClO_4$), lithium hexafluoroarsenate ($LiAsF_6$), lithium tetraphenyl borate ($LiB(C_6H_5)_4$), lithium methanesulfonate ($LiCH_3SO_3$), lithium trifluoromethanesulfonate ($LiCF_3SO_3$), lithium tetrachloroaluminate ($LiAlCl_4$), lithium hexafluorosilicate ($Li_2SiF_6$), lithium chloride (LiCl) and lithium bromide (LiBr) . Among them, at least one type of a group composed of lithium hexafluorophosphate, lithium tetrafluoroborate, lithium perchlorate, and lithium hexafluoroarsenate is favorable, and lithium hexafluorophosphate is more favorable.

(Non-aqueous Solvent)

Examples of the non-aqueous solvent include a lactone-based solvent such as $\gamma$-butyrolactone, $\gamma$-valerolactone, $\delta$-valerolactone, or $\varepsilon$-caprolactone, a carbonate ester-based solvent such as ethylene carbonate (EC), propylene carbonate (PC), butylene carbonate (BC), vinylene carbonate (VC), dimethyl carbonate (DMC), ethyl methyl carbonate (EMC), or diethyl carbonate (DEC), an ether-based solvent such as 1,2-dimethoxyethane, 1-ethoxy-2-methoxyethane, 1,2-diethoxyethane, tetrahydrofuran, or 2-methyl tetrahydrofuran, a nitrile-based solvent such as acetonitrile, a sulfolane-based solvent, phosphoric acids, a phosphate ester solvent, pyrrolidones, disulfonic anhydride, or carboxylic acid ester. Any one type of the aforementioned non-aqueous solvents may be independently used, or two or more types of the non-aqueous solvents may be mixed and used.

Further, as the non-aqueous solvent, it is favorable to use a mixture of cyclic carbonate ester such as ethylene carbonate (EC), propylene carbonate (PC), or butylene carbonate (BC), and chain carbonate ester such as dimethyl carbonate (DMC), ethyl methyl carbonate (EMC), or diethyl carbonate (DEC), and it is favorable to use the non-aqueous solvent containing a compound in which a part or all of hydrogen of the cyclic carbonate ester or the chain carbonate ester is fluorinated. As the fluorinated compound, it is favorable to use fluoroethylene carbonate (4-fluoro-1, 3-dioxolan-2-on: FEC) or difluoroethylene carbonate (4,5-difluoro-1,3-dioxolan-2-on: DFEC). Among them, it is favorable to use difluoroethylene carbonate as the non-aqueous solvent. This is because difluoroethylene carbonate has excellent cycle characteristic improvement effect.

(High Molecular Compound)

As the high molecular compound (matrix high molecular compound) that holds the non-aqueous electrolyte, one having a characteristic compatible with the solvent can be used. Examples of the fluorine-based high molecular compound include polyvinylidene fluoride (PVdF), a copolymer containing vinylidene fluoride (VdF) and hexafluoropropylene (HFP) in repeating unit, a copolymer containing vinylidene fluoride (VdF) and trifluoroethylene (TFE) in repeating unit. In addition, examples include polyethylene oxide (PEO), an ether-based high molecular compound such as a crosslinked body containing polyethylene oxide (PEO), polyacrylonitrile (PAN), one containing polypropylene oxide (PPO) or polymethyl methacrylate (PMMA) in repeating unit, a silicone resin, and a polyphosphazene modified polymer. One type of the high molecular compounds may be independently used, or two or more types of the molecular compounds may be mixed and used.

(Packaging Material)

The packaging material 31 is configured from a first packaging portion 31A that accommodates the battery element 40 and a second packaging portion 31B that functions as a cover that covers the battery element 40.

A laminated film that is a film packaging material used as an example of the packaging material 31 is made of a multilayer film in which an outside resin layer and an inside resin layer are respectively formed on both surfaces of a metal layer such as a metal foil, and having dampproofness and insulation. As the outside resin layer, nylon (Ny) or polyethylene terephthalate (PET) is used because of toughness and beauty of appearance, and flexibility. The metal foil plays the most important role to prevent infiltration of moisture, oxygen, and light and protect the battery element 40 that is content. Aluminum (Al) is most frequently used because of lightness, stretching property, price, and easy to process. The inside resin layer is a portion resolved by heat or ultrasonic waves, and mutually fused, and a polyolefin-based resin material, for example, unstretched polypropylene (CPP) is frequently used. Note that the packaging material 31 may be configured from a film packaging material made of a laminated film having another laminated structure, a high molecular film of polypropylene, or a metal film, in place of the above-described laminated film.

(Characteristic Configuration of Secondary Battery of Present Technology)

The secondary battery of the present technology satisfies Formula (A), Formula (B), and Formula (C) below:

$$\text{Formula (A)}$$

$$1.005 \leq (Ac/Aa)$$

(in the formula, Ac: an electrode area ($cm^2$) of the positive electrode and Aa: an electrode area ($cm^2$) of the negative electrode);

Formula (B)

$$(Ac/Aa) < (Q_{A1}/Q_{C1})$$

(in the formula, $Q_{C1}$ (mAh/cm$^2$): a first positive electrode charge capacity per unit area and $Q_{A1}$ (mAh/cm$^2$) : a first negative electrode charge capacity per unit area); and

Formula (C)

$$0.90 \leq (Q_{CL}/Q_{AL}) \leq 1.10$$

(in the formula, $Q_{CL}$ (mAh/cm$^2$) : irreversible capacity per unit area of the positive electrode and $Q_{AL}$ (mAh/cm$^2$) : irreversible capacity per unit area of the negative electrode)

The secondary battery having a configuration that satisfies the formulas (A) to (C) has a structure where the electrode area Ac (cm$^2$) of the positive electrode is larger than the electrode area Aa (cm$^2$) of the negative electrode. The secondary battery having a configuration that satisfies the formulas (A) to (C) has a configuration in which the first positive electrode charge capacity per unit area $Q_{C1}$ (mAh/cm$^2$) is smaller than the first negative electrode charge capacity per unit area $Q_{A1}$ (mAh/cm$^2$). Further, a ratio ($Q_{CL}/Q_{AL}$) of the irreversible capacity per unit area of a positive electrode $Q_{CL}$ (mAh/cm$^2$) and the irreversible capacity per unit area of a negative electrode $Q_{AL}$ (mAh/cm$^2$) falls within a predetermined range.

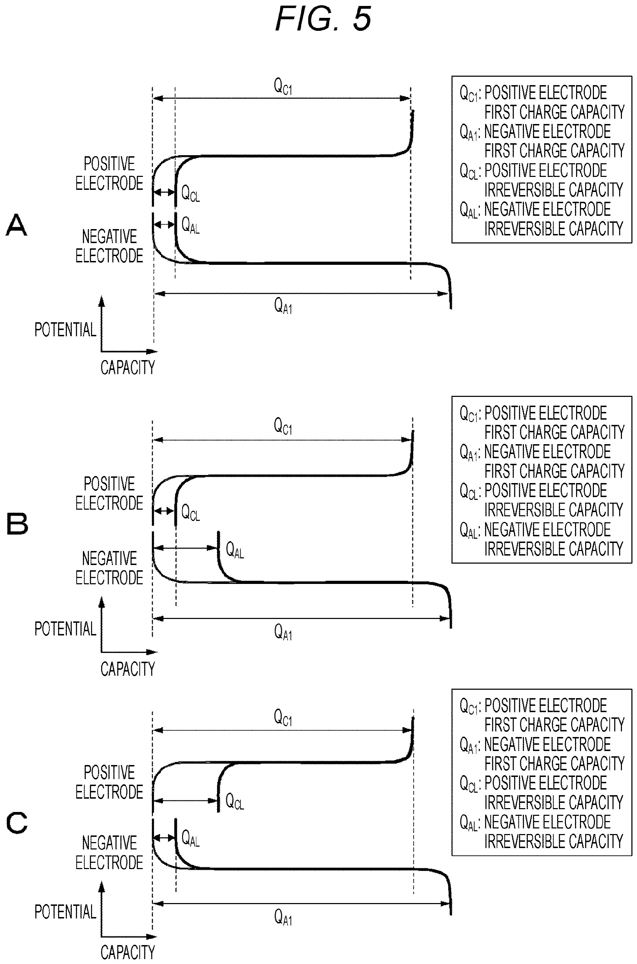

In such a secondary battery, deterioration of cycle characteristics can be suppressed and the generation of gasses can be suppressed. Hereinafter, characteristics of the secondary battery of the present technology will be described with reference to the graphs illustrated in Figs. 5A to 5C. Fig. 5A is a graph illustrating an example of potential change (V vs. Li/Li$^+$) of the positive electrode and the negative electrode with respect to the capacity about the secondary battery of the present technology. Fig. 5B a graph illustrating an example of potential change (V vs. Li/Li$^+$) of the positive electrode and the negative electrode with respect to the capacity about another secondary battery having a configuration different from the secondary battery of the present technology. Fig. 5C is a graph illustrating an example of potential change (V vs. Li/Li$^+$) of the positive electrode and the negative electrode with respect to the capacity about another secondary battery having a configuration different from the secondary battery of the present technology.

In the secondary battery that satisfies the formulas (A) to (C), the electrode area of the negative electrode is smaller than the electrode area of the positive electrode. Therefore, the irreversible capacity consumed by the clearance between the positive electrode and the negative electrode can be suppressed, and the cycle characteristics can be stabilized over a long period of time. That is, deterioration of the capacity of when charge and discharge is repeated can be suppressed. Note that, as for an upper value of the formula (A), the area ratio is favorably small from the viewpoint of obtaining a more highly efficient secondary battery, and thus (Ac/Aa) $\leq$ 1.50 is favorable. In a case where Ac is larger than 1.5 times of Aa, an area of a portion not facing the negative electrode goes to waste and the cell becomes insufficient when the cell is configured. Therefore, it is not favorable.

Further, in the secondary battery that satisfies the formulas (A) to (C), the charge termination of the secondary battery is defined by drastic potential rise in the charge end stage of the positive electrode on a constant basis . That is, the electrode that defines the charge termination is always the positive electrode. For example, as illustrated in the curve that indicates the potential change in Fig. 5A, the relationship $Q_{A1} > Q_{C1}$ is satisfied, and the charge termination of the secondary battery is defined by the drastic potential rise in the charge end stage of the positive electrode . Further, the electrode that defines the charge termination is the positive electrode. Further, a margin is secured even if a use region gap associated with charge and discharge is caused, and thus reversal of the electrode that defines the charge termination is not caused. If the electrode that defines the charge termination of the secondary battery is the negative electrode, and the charge termination is defined by drastic potential drop in the charge end stage of the negative electrode, the potential of the negative electrode drops to a potential where the electrolyte solution cannot stably exist, and a large amount of gases occurs due to decomposition of the electrolyte solution.

Further, in the secondary battery that satisfies the formulas (A) to (C), the formula (C) is satisfied, and thus the discharge termination is not defined only by the drastic voltage change in the discharge end stage of one electrode, and the voltage change in the discharge end stage is shared by both electrodes. Therefore, an overdischarge state of the electrodes is suppressed, and deterioration of the characteristics can be suppressed. Further, a discharge cut-off voltage can be decreased. Therefore, an output can be improved. For example, in a case where the cut-off voltage at the time of discharge is set to 1.0V, the difference between the potential of the positive electrode and the potential of the negative electrode becomes 1.0 V. In a case where the irreversible capacity of the negative electrode is extremely large, the discharge is determined only by the negative electrode. Therefore, the negative electrode potential rises up to a plateau potential of the negative electrode + 1.0 V, and may be subject to a potential region where a side reaction is more likely to occur. In this case, to suppress the side reaction, the discharge cut-off voltage may just be caused to rise (for example, 1.5V, or the like), but if the discharge cut-off voltage rises, efficiency is deteriorated and the output is decreased. Therefore, it is better to decrease the discharge cut-off voltage.

For example, in a case where the lithium ion phosphate compound having an olivine structure is used as the positive electrode active material and the titanium-containing lithium composite oxide is used as the negative electrode active material, it is favorable to decrease the discharge cut-off voltage to 0.9 V. To decrease the cut-off voltage and to suppress the side reaction, if a position where the potential of the positive electrode is decreased at the time of discharge and a position where the potential of the negative electrode rises are set to nearly the same position, the potential change of only one electrode can be made small.

Meanwhile, in a secondary battery that does not satisfy the formula (C), as illustrated in Fig. 5B, the discharge termination is defined by drastic potential change in the discharge end stage of only the negative electrode, and the potential of the negative electrode rises in the discharge end stage and the negative electrode is in an extreme overdischarge state. Further, a side reaction may be caused on the negative electrode, and the negative electrode may be deteriorated. As illustrated in Fig. 5C, the discharge termination is defined by the drastic potential change in the discharge end stage of only the positive electrode, and the potential of the positive electrode falls in the discharge end stage and the positive electrode is in an extreme overdischarge state. Further, a side reaction may be caused, and the positive electrode may be deteriorated.

(Method of Defining Electrode Areas)

The electrode area of the positive electrode in the formula (A) refers to an area of a forming region of the positive electrode active material layer, and the electrode area of the negative electrode refers to an area of a forming region of the negative electrode active material layer . For example, a region of the electrode current collector exposed portion, where no electrode active material layer is formed, is excluded from the electrode area.

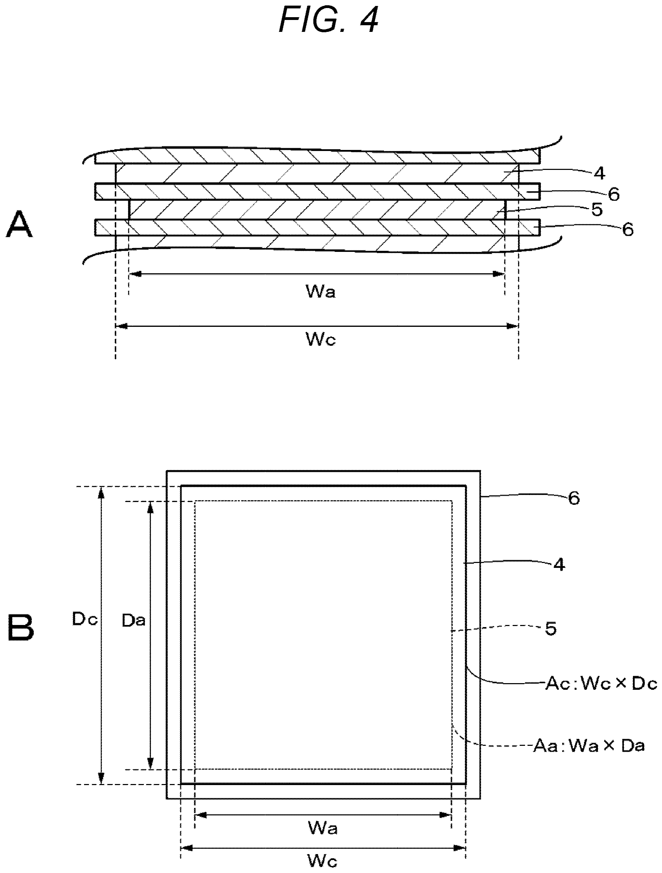

The secondary battery using the battery element having a laminated electrode structure can define the electrode area $Ac$ of the positive electrode and the electrode area $Aa$ of the negative electrode, as follows, for example. An area of a forming region of the positive electrode active material layer is the electrode area $Ac$ of the positive electrode and an area of a forming region of the negative electrode active material layer is the electrode area $Aa$ of the negative electrode, of the pair of the positive electrode active material layer and negative electrode active material layer facing through the separator. In the example illustrated in Figs. 4A and 4B, the forming region of the positive electrode active material layer is a square with a longitudinal width $Dc$ and a lateral width $Wc$, and the electrode area $Ac$ of the positive electrode is $Ac = Dc \times Wc$. Similarly, the forming region of the negative electrode active material layer is a square with a longitudinal width $Da$ and a lateral width $Wa$, and the electrode area $Aa$ of the negative electrode is $Aa = Da \times Wa$.

Note that an area of clearance between the positive electrode and the negative electrode becomes relatively smaller as the electrode area becomes larger, and energy density per unit volume can be improved, and thus the electrode area is favorably 40 cm$^2$ or more. Further, if the number of lamination is increased, the thickness of the cell (secondary battery) is increased, and temperature distribution is caused due to heat generation associated with the charge and discharge and the battery tends to be deteriorated. In response to that, the thickness of the battery element having a laminated electrode structure is favorably within 15 mm to improve heat dissipation.

(1-2) Method of Manufacturing Secondary Battery

The above-described secondary battery can be manufactured by following processes, for example.

(Manufacturing of Positive Electrode)

The positive electrode material, the conducting agent, and the binding agent are mixed, and the positive electrode mixture is prepared. The positive electrode mixture is dispersed in a solvent such as N-methyl-2-pyrrolidone, and positive electrode mixture slurry is obtained. Next, the positive electrode mixture slurry is applied to both surfaces of the beltlike positive electrode current collector 4A and the solvent is dried. Then the positive electrode current collector 4A is compression molded by a roll-press machine or the like, and the positive electrode active material layer 4B is formed and a positive electrode sheet is obtained. The positive electrode sheet is cut into predetermined dimensions, and the positive electrode 4 is produced. At this time, a part of the positive electrode current collector 4A is exposed, and the positive electrode active material layer 4B is formed. Following that, an unnecessary portion of the positive electrode current collector exposed portion is cut, and the positive electrode current collector exposed portions 4C are formed. Accordingly, the positive electrode 4 is obtained.

(Manufacturing of Negative Electrode)

The negative electrode material, the binding agent, and the conducting agent are mixed, and a negative electrode mixture is prepared. The negative electrode mixture is dispersed in a solvent such as N-methyl-2-pyrrolidone, and negative electrode mixture slurry is obtained. Next, the negative electrode mixture slurry is applied to the negative electrode current collector 5A, and the solvent is dried. Then, the negative electrode current collector 5A is compression molded by a roll press machine or the like, and the negative electrode active material layer 5B is formed and a negative electrode sheet is obtained. The negative electrode sheet is cut into predetermined dimensions, and the negative electrode 5 is produced. At this time, a part of the negative electrode current collector 5A is exposed, and the negative electrode active material layer 5B is formed. Following that, an unnecessary portion of the negative electrode current collector exposed portion is cut, and the negative electrode current collector exposed portions 5C are formed. Accordingly, the negative electrode 5 is obtained.

(Formation of Matrix High Molecular Compound Layer)

Next, an application solution containing the non-aqueous electrolyte, the high molecular compound, and a dispersed solvent of N-methyl-2-pyrrolidone or the like is applied on at least one of both principal planes of the separator, and is then dried, so that a matrix high molecular compound layer is formed.

(Laminate Process)

Next, the positive electrodes 4 and the negative electrodes 5 are alternately inserted into the separators 6 where the matrix high molecular compound layer is formed, and for example, a predetermined number of the positive electrodes 4 and the negative electrodes 5 are layered and laminated in the order of the positive electrode 4, the separator 6, the negative electrode 5, ...the separator 6, the negative electrode 5, the separator 6, and the positive electrode 4. Next, the positive electrodes 4, the negative electrodes 5, and the separators 66 are fixed in a state of being closely pressed, so that the battery element 40 is produced. To more firmly fix the battery element 40, a fixing member 35 such as an adhesive tape can be used, for example . In a case of fixing the battery element 40 using the fixing member 35, the fixing members 35 are provided to both side portions of the battery element 40, for example.

(Current Collector Exposed Portion Cut Process)

Next, the plurality of positive electrode current collector exposed portions 4C and the plurality of negative electrode current collector exposed portions 5C are bent to have a U shape in cross-section. Next, tips of the positive electrode current collector exposed portions 4C and the negative electrode current collector exposed portions 5C, with which the U-shaped bent portions are formed, are to cut and even up. In the current collector exposed portion cut process, the U-shaped bent portions having an optimum shape are formed in advance, and excess portions of the positive electrode current collector exposed portions 4C and the negative electrode current collector exposed portions 5C are cut in accordance with the U-shaped bent shapes.

(Positive Electrode Tub and Negative Electrode Tub Connection Process)

Next, the positive electrode current collector exposed portions 4C and the positive electrode tub 32 are connected. The negative electrode current collector exposed portions 5C and the negative electrode tub 33 are connected. Note that the positive electrode tub 32 and the negative electrode tub 33 are provided with the adhesive film 34 in advance.

(Package Process)

The produced battery element 40 is packaged with the packaging material 31. A top portion where the positive electrode tub 32 and the negative electrode tub 33 are pulled out, a bottom portion at a side facing the top portion, and one of both side portions sandwiched by the top portion and the bottom portion are heated with a heater head and thermally fused.

Next, the electrolyte solution is poured through an opening of the other side portion that is not thermally fused. Finally, the packaging material 31, of the side portion into which the electrolyte solution has been poured, is thermally fused, and the battery element 40 is sealed in the packaging material 31. At this time, vacuum seal is performed, so that the matrix high molecular compound layer is impregnated with the non-aqueous electrolyte, the high molecular compound swells, and the electrolyte layer (not illustrated) made of the gel electrolyte is formed. Accordingly, the secondary battery is completed. Note that the electrolyte layer may be formed by being applied on both surfaces of at least one of the positive electrode and the negative electrode, or at least one surface of the separator.

2. Second Embodiment

(2-1) Configuration Example of Secondary Battery

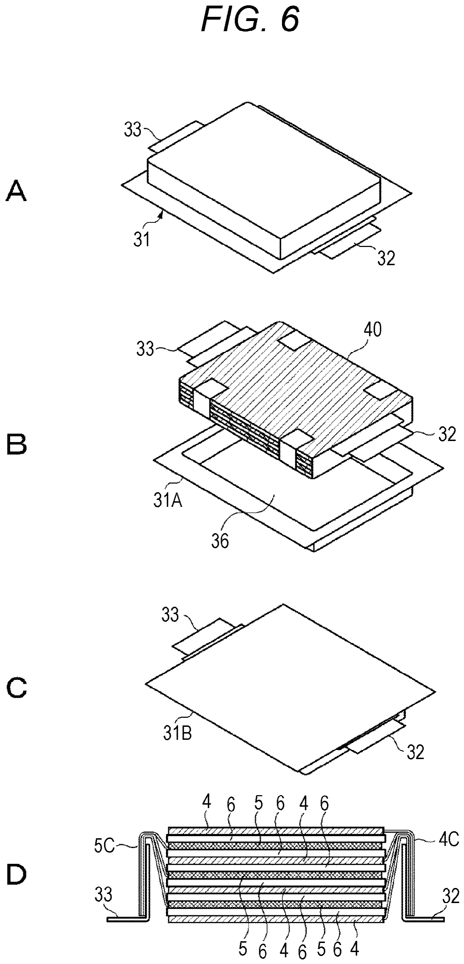

A secondary battery according to a second embodiment of the present technology will be described. Fig. 6A is a schematic wiring diagram illustrating an appearance of a secondary battery according to a second embodiment of the present technology and Fig. 6B is a schematic wiring diagram illustrating a configuration of the secondary battery. Note that Fig. 6B illustrates a configuration of a case where a bottom surface and a top surface of the secondary battery illustrated in Fig. 6A are inverted. Further, Fig. 6C is a schematic wiring diagram illustrating a bottom surface side of the appearance of the secondary battery. Fig. 6D is a side view of a battery element packaged with a packaging material.

The secondary battery according to the second embodiment is similar to that of the first embodiment except that a configuration of a battery element and the like are different from those of the first embodiment. Therefore, hereinafter, points different from those of the first embodiment will be mainly described, and description of portions overlapping with the first embodiment is appropriately omitted.

As illustrated in Figs. 6A to 6D, the secondary battery includes a battery element 40 and a packaging material 31. The battery element 40 is packaged with the packaging material 31. A positive electrode tub 32 and a negative electrode tub 33 respectively connected with positive electrode current collector exposed portions 4C and negative electrode current collector exposed portions 5C are pulled out of mutually facing sides, which is different from the secondary battery according to the first embodiment, where the positive electrode tub 32 and the negative electrode tub 33 are pulled out of the sealed portion of the packaging material 31 to an outside.

(Battery Element)

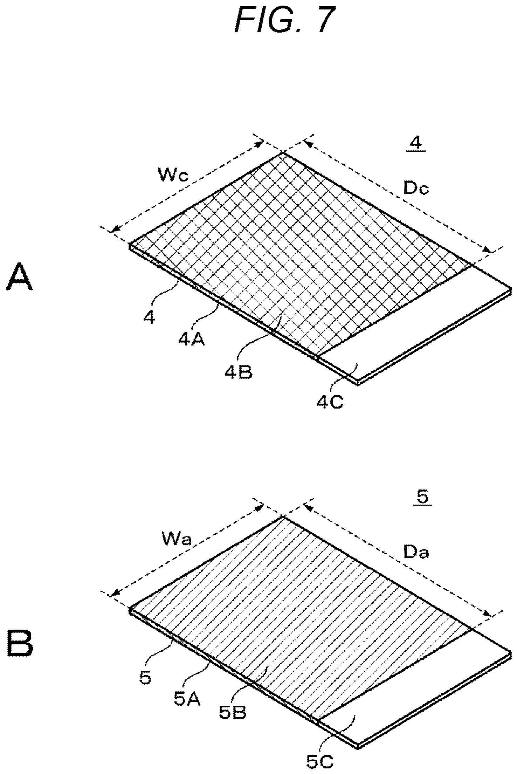

The battery element 40 has a laminated electrode structure in which approximately square positive electrodes 4 illustrated in Fig. 7A, and approximately square negative electrodes 5 illustrated in Fig. 7B and arranged to face the positive electrodes 4 are alternately laminated through separators 6. Note that, although not illustrated, the battery element 40 may include an electrolyte layer, similarly to the first embodiment. In this case, for example, in the battery element 40, the electrolyte (electrolyte layer) may be formed at least between the positive electrode 4 and the separator 6 or between the negative electrode 5 and the separator 6. The electrolyte is prepared such that an electrolyte solution is held in a high molecular compound, for example, and is a gel electrolyte. Note that, in a case where the electrolyte solution that is a liquid electrolyte is used as the electrolyte, the electrolyte layer is not formed, and the battery element 40 is impregnated with the electrolyte solution filled in the packaging material 31.

As illustrated in Fig. 6D, the plurality of positive electrodes 4 and the positive electrode current collector exposed portions 4C respectively electrically connected thereto, and the plurality of negative electrodes 5 and the negative electrode current collector exposed portions 5C respectively electrically connected thereto are pulled out of the battery element 40. The positive electrode tub 32 and the negative electrode tub 33 are respectively connected to the positive electrode current collector exposed portions 4C and the negative electrode current collector exposed portions 5C. Further, the positive electrode current collector exposed portions 4C and the negative electrode current collector exposed portions 5C are bent to have an approximately U shape in cross-section. The positive electrode tub 32 and the negative electrode tub 33 are pulled out of a sealed portion of the packaging material 31 in different directions toward outside.

The secondary battery according to the second embodiment satisfies formulas (A) to (C), similarly to the first embodiment, and thus has similar effect to the secondary battery according to the first embodiment.

(2-2) Method of Manufacturing Secondary Battery

The secondary battery can be produced, similarly to the first embodiment, except that the battery element 40 illustrated in Fig. 6D is formed in place of the battery element 40 illustrated in Figs. 2A and 2B.

3. Third Embodiment

(3-1) Configuration Example of Secondary Battery

A secondary battery according to a third embodiment will be described. The secondary battery according to the third embodiment is similar to that of the first embodiment except that a wound electrode body 50 that is a wound battery element is used in place of the laminated battery element.

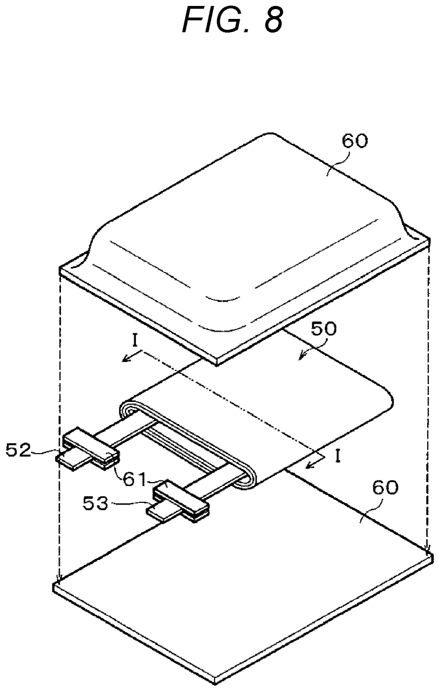

Fig. 8 is an exploded perspective view of a battery that accommodates a wound electrode body. The secondary battery accommodates, inside a packaging material 60, the wound electrode body 50 to which a positive electrode lead 52 and a negative electrode lead 53 are attached.

The positive electrode lead 52 is configured from a metal material such as aluminum, and the negative electrode lead 53 is configured from a metal material such as copper, nickel, or stainless steel. These metal materials are formed in a thin plate manner or a mesh pattern manner. The packaging material 60 is similar to the packaging material 31 of the first embodiment.

The positive electrode lead 52 and the negative electrode lead 53 are pulled out in the same direction from an inside of the packaging material 60 toward outside . An adhesive film 61 similar to that of the first embodiment is arranged between the packaging material 60 and the positive electrode lead 52, and between the packaging material 60 and the negative electrode lead 53. The adhesive film 61 improves adhesion between the packaging material 60, and the positive electrode lead 52 and the negative electrode lead 53, both being made of the metal materials.

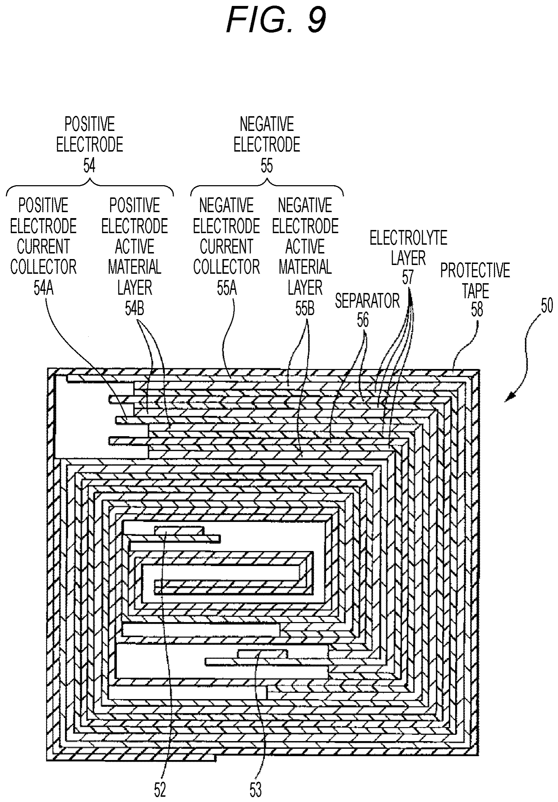

Fig. 9 illustrates a section structure of the wound electrode body 50 illustrated in Fig. 8 along the I-I line of the wound electrode body 50. As illustrated in Fig. 9, the wound electrode body 50 is obtained such that a beltlike positive electrode 54 and a beltlike negative electrode 55 are laminated through a beltlike separator 56 and an electrolyte layer 57 and wound, and an outermost peripheral portion is protected by a protective tape 58 as needed. Note that the positive electrode, the negative electrode, and the separator are similar to those of the first embodiment except for the shapes. The electrolyte layer 57 is similar to the electrolyte layer of the first embodiment. In a case where an electrolyte solution as a liquid electrolyte is used as the electrolyte, the electrolyte layer 57 is not formed, and the wound electrode body 50 in a configuration where the electrolyte layer 57 is omitted is impregnated with the electrolyte solution filled in the packaging material 60.

The secondary battery according to the third embodiment satisfies formulas (A) to (C), similarly to the first embodiment, and thus has similar effect to the secondary battery according to the first embodiment.

(Method of Defining Electrode Areas)

Note that, in the secondary battery using the battery element having the wound electrode structure like the third embodiment, an electrode area $Ac$ of the positive electrode and an electrode area $Aa$ of the negative electrode can be defined as follows, for example. A total area of an area of a forming region of a positive electrode active material layer formed on one surface of a positive electrode current collector and an area of a forming region of the positive electrode active material layer formed on the other surface is the electrode area $Ac$ of the positive electrode, of the pair of the positive electrode and the negative electrode facing through the separator. Similarly, a total area of an area of a forming region of a negative electrode active material layer formed on one surface of a negative electrode current collector and an area of a forming region of the negative electrode active material layer formed on the other surface is the electrode area $Aa$ of the negative electrode.

(3-2) Method of Manufacturing Secondary Battery

The above-described secondary battery can be produced by following processes, for example.

(Method of Manufacturing Positive Electrode)

A positive electrode material, a conducting agent, and a binding agent are mixed, and a positive electrode mixture is prepared. The positive electrode mixture is dispersed in a solvent such as N-methyl-2-pyrrolidone, and paste positive electrode mixture slurry is produced. Next, the positive electrode mixture slurry is applied on a positive electrode current collector 54A, and the solvent is dried. Then the positive electrode current collector 54A is compression molded by a roll press machine or the like, whereby a positive electrode active material layer 54B is formed and the positive electrode 54 is produced.

(Method of Manufacturing Negative Electrode)

A negative electrode material, a binding agent, and a conducting agent are mixed, and a negative electrode mixture is prepared. The negative electrode mixture is dispersed in a solvent such as N-methyl-2-pyrrolidone, and paste negative electrode mixture slurry is produced. Next, the negative electrode mixture slurry is applied to a negative electrode current collector 55A, and the solvent is dried. Then, the negative electrode current collector 55A is compression molded by a roll press machine or the like, whereby a negative electrode active material layer 55B is formed and the negative electrode 55 is produced.

A precursor solution containing a non-aqueous electrolyte, a high molecular compound, and a mixture solvent is applied on both surfaces of the positive electrode 54 and the negative electrode 55. The mixture solvent is volatilized, and the electrolyte layer 57 is formed. Then, the positive electrode lead 52 is attached to an end portion of the positive electrode current collector 54A by welding, and the negative electrode lead 53 is attached to an end portion of the negative electrode current collector 55A by welding.

Next, the positive electrode 54 and the negative electrode 55 on which the electrolyte layer 57 has been formed are laminated through the separator 56, and a laminated body is obtained. The laminated body is wound in a longitudinal direction. The protective tape 58 is glued on an outermost peripheral portion, and the wound electrode body 50 is formed.

Finally, for example, the wound electrode body 50 is put between the packaging materials 60, and outer edge portions of the packaging material 60 are stuck together and sealed by thermal fuse or the like. At that time, the adhesive film 61 is inserted between the positive electrode lead 52 and the negative electrode lead 53, and the packaging materials 60. Accordingly, the secondary battery illustrated in Figs. 8 and 9 is completed.

(Another Method of Manufacturing Secondary Battery)

The secondary battery may be produced as follows. First, production of the positive electrode 54 and the negative electrode 55 and preparation of the non-aqueous electrolyte are performed, similarly to the above description.

Next, after an application solution containing the non-aqueous electrolyte, the high molecular compound, and a dispersed solvent of N-methyl-2-pyrrolidone or the like is applied on at least one of both principal planes of the separator 56, the application solution is dried, and a matrix high molecular compound layer is formed.

Next, the positive electrode 54 and the negative electrode 55 are laminated through the separator 56 with at least one principal plane on which the matrix high molecular compound layer has been formed and a laminated body is obtained. The laminated body is wound in the longitudinal direction, the protective tape 58 is glued to the outermost peripheral portion, and the wound electrode body 50 is produced.

Next, the wound electrode body 50 is sandwiched by the packaging materials 60, and an outer peripheral edge portion except one side is thermally fused and formed into a bag, and the wound electrode body 50 is housed inside the packaging materials 60. At that time, the adhesive film 61 is inserted between the positive electrode lead 52 and the negative electrode lead 53, and the packaging materials 60.

Next, the non-aqueous electrolyte is poured through the unfused portion of the packaging material 60, and then the unfused portion of the packaging material 60 is sealed by thermal fuse or the like. At this time, vacuum seal is performed, so that the matrix high molecular compound layer is impregnated with the non-aqueous electrolyte, the matrix high molecular compound swells, and the electrolyte layer 57 is formed. Accordingly, the intended secondary battery can be obtained.

Further, the secondary battery may also be produced as follows. First, the positive electrode 54 and the negative electrode 55 are produced, as described above. After the positive electrode lead 52 and the negative electrode lead 53 are attached to the positive electrode 54 and the negative electrode 55, the positive electrode 54 and the negative electrode 55 are laminated through the separator 56 and wound. The protective tape 58 is glued to the outermost peripheral portion, and the wound electrode body 50 is formed. Next, the wound electrode body 50 is sandwiched by the packaging materials 60, the outer peripheral edge portion except one side is thermally fused and formed into a bag, and the wound electrode body 50 is housed inside the packaging materials 60. Next, an electrolyte composition containing a monomer as a raw material of the high molecular compound, a polymerization initiator, and another material such as a polymerization inhibitor as needed is prepared, together with the non-aqueous electrolyte, and is poured inside the packaging material 60.

After the electrolyte composition is poured, the opening portion of the packaging material 60 is thermally fused and sealed under a vacuum atmosphere. Next, heat is applied and the monomer is polymerized, and a high molecular compound is obtained, so that the electrolyte layer 57 is formed. Accordingly, the intended secondary battery can be obtained.

4. Fourth Embodiment

(4-1) Configuration Example of Secondary Battery

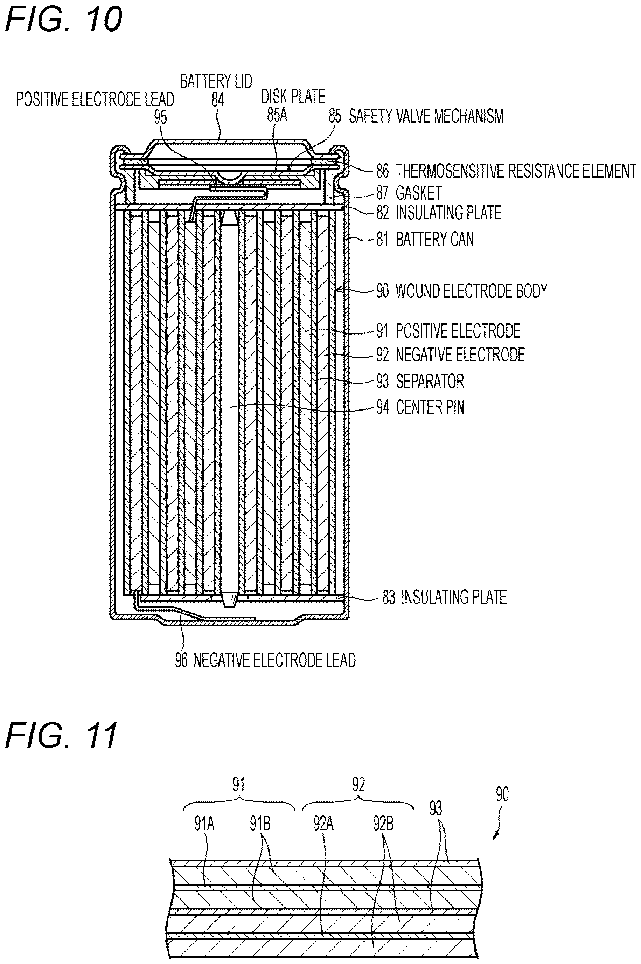

A secondary battery according to a fourth embodiment of the present technology will be described. Fig. 10 is a sectional view illustrating an example of the secondary battery according to the fourth embodiment. The secondary battery is a so-called cylinder type secondary battery, and includes a wound electrode body 90 in which a beltlike positive electrode 91 and a beltlike negative electrode 92 are wound through a separator 93 together with a liquid electrolyte (not illustrated, and hereinafter, may also appropriately referred to as electrolyte solution) in a nearly hollow columnar battery can 81.

The battery can 81 has a hollow structure with one end portion closed and the other end portion open, and is formed of Fe, Al, or an alloy thereof, for example. Note that Ni or the like may be plated on a surface of the battery can 81. A pair of insulating plates 82 and 83 is arranged to sandwich the wound electrode body 90 from above and below, and vertically extend with respect to a wound peripheral surface.

A battery lid 84, a safety valve mechanism 85, and a thermosensitive resistance element (positive temperature coefficient: PTC element) 86 are caulked in the open end portion of the battery can 81 through a gasket 87. Accordingly, the battery can 81 is sealed. The battery lid 84 is formed of a material similar to that of the battery can 81, for example. The safety valve mechanism 85 and the thermosensitive resistance element 86 are provided inside the battery lid 84, and the safety valve mechanism 85 is electrically connected with the battery lid 84 through the thermosensitive resistance element 86. In the safety valve mechanism 85, when an internal pressure becomes a fixed pressure or more due to internal short-circuit or heating from an outside, a disk plate 85A is inverted and cuts the electrical connection between the battery lid 84 and the wound electrode body 90. The thermosensitive resistance element 86 prevents abnormal heat generation caused by a large current. In the thermosensitive resistance element 86, a resistance is increased according to a temperature rise. The gasket 87 is formed of an insulating material, for example, and asphalt may be applied on a surface of the gasket 87.

A center pin 94 may be inserted in the center of the wound electrode body 90. A positive electrode lead 95 formed of a conductive material of Al or the like is connected to the positive electrode 91, and a negative electrode lead 96 formed of a conductive material of Ni or the like is connected to the negative electrode 92, for example. The positive electrode lead 95 is welded to the safety valve mechanism 85 and is electrically connected with the battery lid 84, and the negative electrode lead 96 is welded to the battery can 81 and is electrically connected with the battery can 81.

Fig. 11 illustrates an enlarged part of the wound electrode body 90 illustrated in Fig. 10. Hereinafter, the positive electrode 91, the negative electrode 92, and the separator 93 will be described in detail.

(Positive Electrode)

The positive electrode 91 has a structure in which a positive electrode active material layer 91B is provided on both surfaces of a positive electrode current collector 91A, for example. Note that, although not illustrated, the positive electrode 91 may have a region where the positive electrode active material layer 91B is provided only on one surface of the positive electrode current collector 91A. As the positive electrode current collector 91A, for example, metal foil such as aluminum (Al) foil, nickel (Ni) foil, or stainless steel (SUS) foil can be used.

The positive electrode active material layer 91B contains one type, or two or more types of positive electrode materials that can store/discharge lithium, as a positive electrode active material, and may contain other materials such as a binding agent and a conducting agent, as needed. Note that, as the positive electrode active material, the conducting agent, and the binding agent, those similar to the first embodiment can be used.

The positive electrode 91 includes the positive electrode lead 95 connected with one end portion of the positive electrode current collector 91A by spot welding or ultrasonic welding.

(Negative Electrode)

The negative electrode 92 has a structure in which a negative electrode active material layer 92B is provided on both surfaces of a negative electrode current collector 92A, for example. Note that, although not illustrated, the negative electrode 92 may have a region where the negative electrode active material layer 92B is provided only on one surface of the negative electrode current collector 92A. The negative electrode current collector 92A is configured from metal foil such as copper foil or aluminum foil.

The negative electrode active material layer 92B contains one type, or two or more types of negative electrode materials that can store/discharge lithium, as a negative electrode active material, and may contain other materials such as a binding agent and a conducting agent, similar to those of the positive electrode active material layer 91B, as needed. Note that, as the negative electrode active material, the conducting agent, and the binding agent, those similar to the first embodiment can be used.

(Separator)

The separator 93 is similar to the separator 6 according to the first embodiment, except that the separator 93 has a beltlike shape.

(Non-aqueous Electrolyte)

The non-aqueous electrolyte is similar to that of the first embodiment.

The secondary battery according to the fourth embodiment satisfies Formula (A), Formula (B), and Formula (C), similarly to the first embodiment, and thus has similar effect to the secondary battery according to the first embodiment.

(Method of Defining Electrode Areas)

Note that the secondary battery using the battery element having a wound electrode structure, like the fourth embodiment, can define an electrode area Ac of the positive electrode and an electrode area Aa of the negative electrode, similarly to the third embodiment.

(4-2) Method of Manufacturing Secondary Battery (Production of Positive Electrode and Negative Electrode and Preparation of Non-aqueous Electrolyte)

First, production of the positive electrode 54 and the negative electrode 55 and preparation of the non-aqueous electrolyte are performed, similarly to the third embodiment.

(Assembly of Non-aqueous Electrolyte Battery)

The positive electrode lead 95 is attached to the positive electrode current collector 91A by welding or the like, and the negative electrode lead 96 is attached to the negative electrode current collector 92A by welding or the like. Following that, the positive electrode 91 and the negative electrode 92 are wound through the separator 93, and the wound electrode body 90 is obtained. A tip portion of the positive electrode lead 95 is welded to the safety valve mechanism, and a tip portion of the negative electrode lead 96 is welded to the battery can 81. Following that, a wound surface of the wound electrode body 90 is sandwiched by the pair of insulating plates 82 and 83, and the wound electrode body 90 is housed inside the battery can 81. After the wound electrode body 90 is housed inside the battery can 81, the non-aqueous electrolyte is poured inside the battery can 81, and the separator 93 is impregnated with the non-aqueous electrolyte. Following that, the battery lid 84, the safety valve mechanism 85 made of a safety valve and the like, and the thermosensitive resistance element 86 are fixed by being caulked in the open end portion of the battery can 81 through the gasket 87. Accordingly, the secondary battery of the present technology illustrated in Fig. 10 is produced.

5. Fifth Embodiment

In a fifth embodiment, an example of a battery pack of a single battery using a laminated film secondary battery similar to that of the first, second, or third embodiment will be described.

This battery pack is a simplified battery pack (also referred to as soft pack). The simplified battery pack is typically built in an electronic device such as a smart phone, and a battery cell, a protection circuit, and the like are fixed with an insulating tape or the like, a part of the battery cell is exposed, and an output such as a connector connected to the main body of the electronic device is provided.

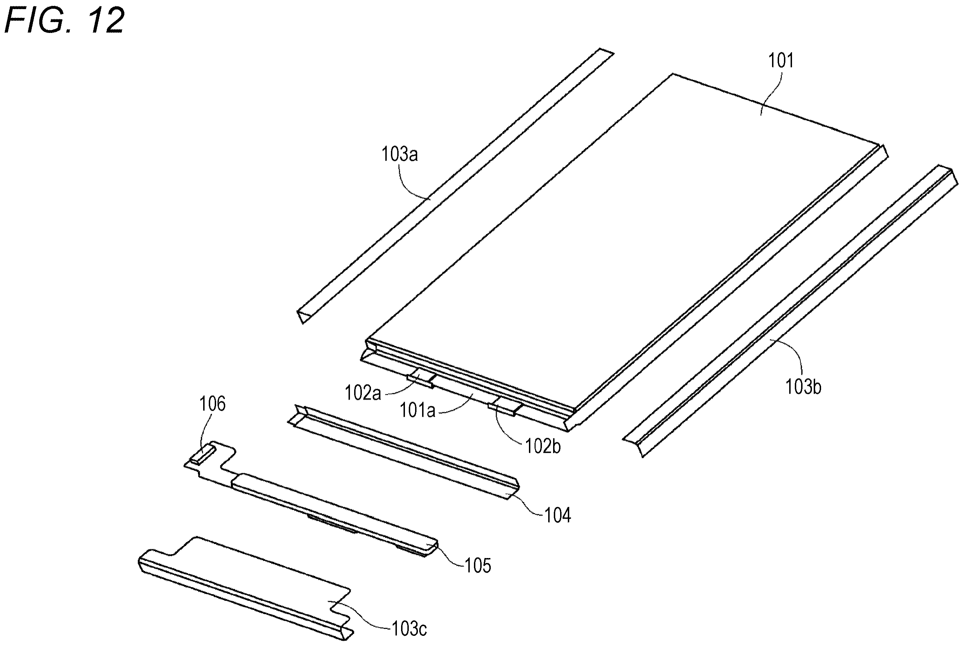

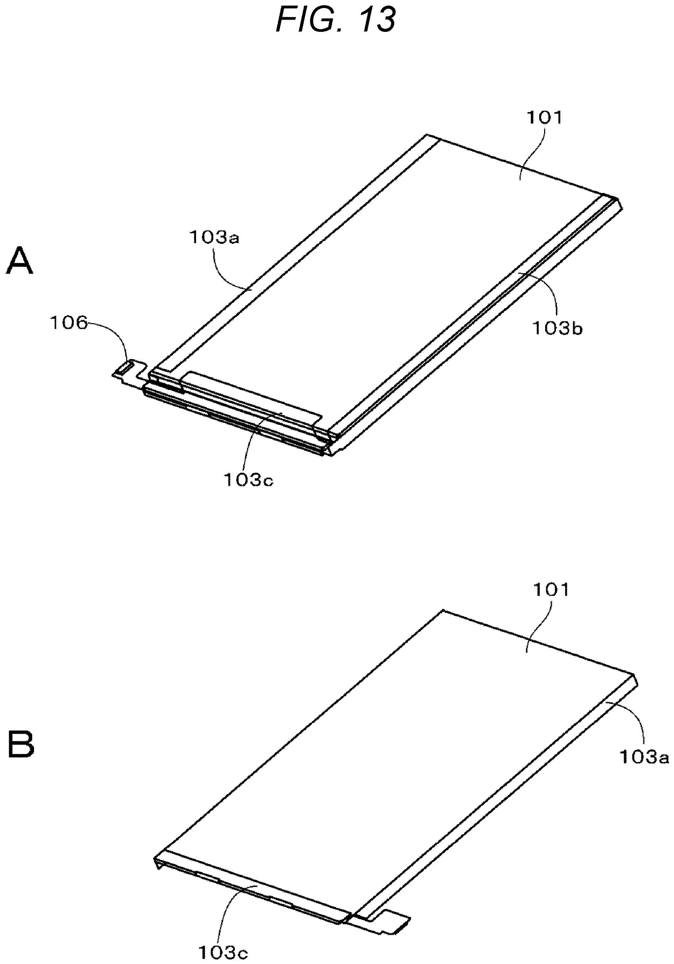

An example of a configuration of the simplified battery pack will be described. Fig. 12 is an exploded perspective view illustrating a configuration example of the simplified battery pack. Fig. 13A is a schematic perspective view illustrating an appearance of the simplified battery pack, and Fig. 13B is a schematic perspective view illustrating the appearance of the simplified battery pack.

As illustrated in Fig. 12, and Figs. 13A and 13B, the simplified battery pack includes a battery cell 101, tubs 102a and 102b pulled out of the battery cell 101, insulating tapes 103a to 103c, an insulating plate 104, a circuit board 105 in which a protection circuit (protection circuit module (PCM)) is formed, and a connector 106. The battery cell 101 is similar to any of the secondary batteries of the first to third embodiments, for example.

The insulating plate 104 and the circuit board 105 are arranged on a terrace portion 101a at a front end of the battery cell 101, and the tubs 102a and 102b pulled out of the battery cell 101 are connected to the circuit board 105.

The connector 106 for an output is connected to the circuit board 105. Members of the battery cell 101, the insulating plate 104, and the circuit board 105 are fixed with the insulating tapes 103a to 103c stuck on predetermined places.

6. Sixth Embodiment

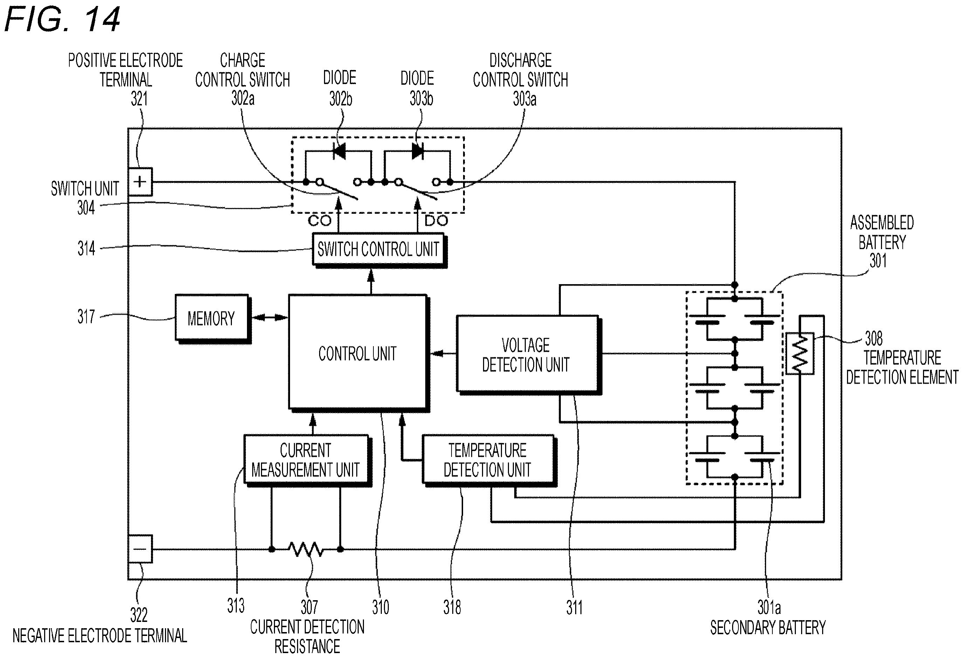

Fig. 14 is a block diagram illustrating a circuit configuration example of a case where the secondary batteries according to the first to fourth embodiments of the present technology are applied to a battery pack. The battery pack includes an assembled battery 301, a package, a switch unit 304 including a charge control switch 302a and a discharge control switch 303a, a current detection resistance 307, a temperature detection element 308, and a control unit 310.

Further, the battery pack includes a positive electrode terminal 321 and a negative electrode lead 322. At the time of charge, the positive electrode terminal 321 and the negative electrode lead 322 are respectively connected to a positive electrode terminal and a negative electrode terminal of a charger, and charge is performed. Further, at the time of use of the electronic device, the positive electrode terminal 321 and the negative electrode lead 322 are respectively connected to a positive electrode terminal and a negative electrode terminal of the electronic device, and discharge is performed.

The assembled battery 301 is formed such that a plurality of secondary batteries 301a is connected in series and/or in parallel. As the secondary battery 301a, at least any of the secondary batteries of the first to fourth embodiments of the present technology can be used. Note that Fig. 14 illustrates a case where six secondary batteries 301a are connected in an arrangement of two cells in parallel and three cells in series (2P3S) as an example. However, any connection method, such as n cells in parallel and m cells in series (n and m are integers), may be employed.

The switch unit 304 includes the charge control switch 302a and a diode 302b, and the discharge control switch 303a and a diode 303b, and is controlled by the control unit 310. The diode 302b has a polarity in an opposite direction to a charge current flowing in a direction from the positive electrode terminal 321 to the assembled battery 301, and in a forward direction with respect to a discharge current flowing in a direction from the negative electrode lead 322 to the assembled battery 301. The diode 303b has a polarity in a forward direction with respect to the charge current and in an opposite direction to the discharge current. Note that, in the example, the switch unit 304 is provided at the + side. However, the switch unit 304 may be provided at the - side.

The charge control switch 302a is controlled by a charge and discharge control unit to be turned OFF when a battery voltage becomes an overcharge detection voltage so that a charge current does not flow in a current path of the assembled battery 301. After the charge control switch 302a is turned OFF, only discharge becomes available through the diode 302b. Further, the charge control switch 302a is controlled by the control unit 310 to be turned OFF when a large current flows at the time of charge, and interrupt the charge current flowing in the current path of the assembled battery 301.

The discharge control switch 303a is controlled by the control unit 310 to be turned OFF when the battery voltage becomes an overdischarge detection voltage so that a discharge current does not flow in the current path of the assembled battery 301. After the discharge control switch 303a is turned OFF, only charge is available through the diode 303b. Further, the discharge control switch 303a is controlled by the control unit 310 to be turned OFF when a large current flows at the time of discharge, and to interrupt the discharge current flowing in the current path of the assembled battery 301.

The temperature detection element 308 is, for example, a thermistor, and is provided near the assembled battery 301, measures the temperature of the assembled battery 301, and supplies the measured temperature to the control unit 310. The voltage detection unit 311 measures voltages of the assembled battery 301 and the secondary batteries 301a that configures the assembled battery 301, performs A/D conversion of the measured voltages, and supplies the converted voltages to the control unit 310. A current measurement unit 313 measures a current using the current detection resistance 307, and supplies the measured current to the control unit 310.

A switch control unit 314 controls the charge control switch 302a and the discharge control switch 303a of the switch unit 304 on the basis of the voltages and the current input from the voltage detection unit 311 and the current measurement unit 313. The switch control unit 314 prevents overcharge, overdischarge, and overcurrent charge and discharge by sending a control signal to the switch unit 304 when any of the voltages of the secondary batteries 301a becomes the overcharge detection voltage or the overdischarge detection voltage or less, or when the large current drastically flows.

Here, in a case of a lithium secondary battery using lithium cobalt oxide and graphite, for example, the overcharge detection voltage is determined to be 4.20 V, 0.05 V, and the overdischarge detection voltage is determined to be 2.4 V, 0.1 V, for example.

As a charge and discharge switch, a semiconductor switch of MOSFET or the like can be used. In this case, a parasitic diode of the MOSFET functions as the diodes 302b and 303b. In a case where a P-channel FET is used as the charge and discharge switch, the switch control unit 314 supplies control signals DO and CO to respective gates of the charge control switch 302a and the discharge control switch 303a. In the case of the P-channel type, the charge control switch 302a and the discharge control switch 303a are turned ON by a gate potential that is lower than a source potential by a predetermined value or more. That is, in normal charge and discharge operations, the control signals CO and DO are set to a low level, and the charge control switch 302a and the discharge control switch 303a are turned to be an ON state.

Then, at the time of overcharge or overdischarge, for example, the control signals CO and DO are set to a high level, the charge control switch 302a and the discharge control switch 303a are turned to be an OFF state.

A memory 317 is made of a RAM or a ROM, and is made of an erasable programmable read only memory (EPROM) that is a non-volatile memory, or the like. The memory 317 stores a numerical value calculated in the control unit 310, internal resistance values of the batteries in an initial stage of the secondary batteries 301a measured in a manufacturing process stage, and the like, in advance, and can also appropriately rewrite the values. Further, the memory 317 stores full charge capacities of the secondary batteries 301a, thereby to calculate a residual capacity together with the control unit 310, for example.

A temperature detection unit 318 measures a temperature using the temperature detection element 308, and performs charge and discharge control at the time of abnormal heat generation and correction in calculation of a residual capacity.

7. Seventh Embodiment

At least any of the secondary batteries according to the first to fourth embodiments and the battery packs according to the fifth and sixth embodiments of the present technology can be used to be mounted on a device such as an electronic device, an electrically driven vehicle, or a storage device, or to supply power.

Examples of the electronic device include a note-type personal computer, a portable information terminal (PDA), a mobile phone, a codeless extension unit, a video movie, a digital still camera, an electronic book, an electronic dictionary, a music player, a radio, a headphone, a game machine, a navigation system, a memory card, a pacemaker, a hearing aid, an electric tool, an electric razor, a refrigerator, an air conditioner, a television, a stereo, a water heater, a microwave, a dishwasher, a laundry machine, a dryer, a light device, a toy, a medical device, a robot, a road conditioner, and a traffic light.

Further, examples of the electrically driven vehicle include a railway vehicle, a golf cart, an electric cart, and an electric car (including a hybrid car). The secondary battery is used as a drive power source or an auxiliary power source for the aforementioned examples.

Examples of the storage device include power storage source for building such as houses or for power generation facilities.

Hereinafter, a specific example of a storage system using a storage device to which the secondary battery of the present technology is applied, of the above-described applications, will be described.

A configuration of the storage system can be as follows. A first storage system is a storage system in which a storage device is charged by a power generation device that generates power from renewable energy. A second storage system is a storage system that includes a storage device, and supplies power to an electronic device connected to the storage device . A third storage system is an electronic device that receives supply of power from a storage device. These storage systems are implemented as systems that achieve efficient power supply in conjunction with an external power supply network.

Further, a fourth storage system is an electrically driven vehicle including a conversion device that converts power into driving force of the vehicle upon receipt of the power from a storage device, and a control device that performs information processing regarding vehicle control on the basis of information regarding the storage device. A fifth storage system is a power system that includes a power information transmission/reception unit that transmits/receives a signal to/from another device through a network, and controls charge and discharge of the storage device on the basis of the information received by the transmission/reception unit. A sixth storage system is a power system that receives supply of power from the storage device, and supplies the power to the storage device from a power generation device or a power network. Hereinafter, the storage systems will be described.

(7-1) Storage System in House as Application Example

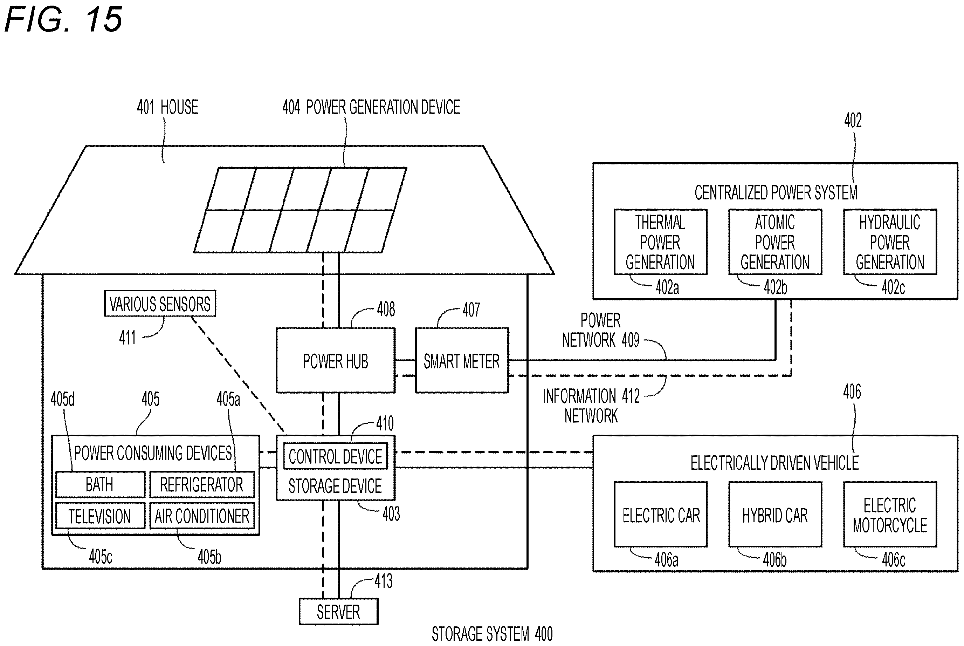

An example in which the storage device using the secondary battery of the present technology is applied to a storage system for houses will be described with reference to Fig. 15. For example, in a storage system 400 for a house 401, power is supplied from a centralized power system 402 of thermal power generation 402a, atomic power generation 402b, and hydraulic power generation 402c to a storage device 403 through a power network 409, an information network 412, a smart meter 407, a power hub 408, and the like. In addition, power is supplied from an independent source such as a domestic power generation device 404 to the storage device 403. The power supplied to the storage device 403 is stored. The power to be used in the house 401 is supplied using the storage device 403. A similar storage system can be used not only in the house 401 but also in a building.

The house 401 is provided with a power generation device 404, power consuming devices 405, the storage device 403, a control device 410 that controls the devices, the smart meter 407, and sensors 411 that acquire various types of information. The devices are connected through the power network 409 and the information network 412. As the power generation device 404, a solar battery or a fuel battery is used, and the generated power is supplied to the power consuming device 405 and/or the storage device 403. The power consuming devices 405 are a refrigerator 405a, an air conditioner 405b as a space conditioning device, a television 405c as a television receiver, a bath 405d, and the like. Further, the power consuming devices 405 include electrically driven vehicles 406. The electrically driven vehicles 406 are an electric car 406a, a hybrid car 406b, and an electric motorcycle 406c.

The secondary battery of the present technology is applied to the storage device 403. The secondary battery of the present technology may be configured from the above-described lithium ion secondary battery, for example. The smart meter 407 includes a function to measure a used amount of commercial power, and to transmit the measured used amount to a power company. The power network 409 may be one of or a combination of DC power distribution, AC power distribution, and non-contact power distribution.

The various sensors 411 are, for example, a motion sensor, an illuminance sensor, an object detection sensor, a power consumption sensor, a vibration sensor, a contact sensor, a temperature sensor, and an infrared sensor. The information acquired by the various sensors 411 is transmitted to the control device 410. A weather state, a human state, and the like are grasped according to the information from the sensors 411, and the power consuming device 405 is automatically controlled and the energy consumption can be minimized. Further, the control device 410 can transmit the information regarding the house 401 to an external power company and the like through the Internet.

The power hub 408 performs processing of branching power lines and DC-AC conversion, and the like. As a communication system of the information network 412 connected with the control device 410, a method of using a communication interface such as universal asynchronous receiver-transceiver: asynchronous receiver transceiver circuit (UART), or a method of using a sensor network by a wireless communication standard such as Bluetooth, ZigBee, or Wi-Fi. The Bluetooth system is applied to multimedia communication, and can perform one-to-many connection communication. ZigBee uses a physical layer of Institute of Electrical and Electronics Engineers (IEEE) 802.15.4. IEEE 802.15.4 is a name of a short-range wireless network standard called personal area network (PAN) or a wireless (W) PAN.

The control device 410 is connected with an external server 413. The server 413 may be managed by any of the house 401, a power company, and a service provider. Information transmitted/received by the server 413 is, for example, power consumption information, life pattern information, an electric utility rate, weather information, natural disaster information, and information regarding power transaction. These pieces of information may be transmitted/received by a domestic power consuming device (for example, a television receiver), or may be transmitted/received by a device outside the house (for example, a mobile phone). These pieces of information may be displayed on a device having a display function, such as a television receiver, a mobile phone, or a personal digital assistant (PDA).

The control device 410 that controls the units is configured from a central processing unit (CPU), a random access memory (RAM), a read only memory (ROM), and the like. In this example, the control device 410 is stored in the storage device 403. The control device 410 is connected with the storage device 403, the domestic power generation device 404, the power consuming devices 405, the various sensors 411, and the server 413 through the information network 412, and has a function to adjust the used amount of the commercial power and the power generation amount. Note that, in addition, the control device 410 may have a function to perform power transaction in a power market.

As described above, the generated power not only from the centralized power system 402 of the thermal power generation 402a, the atomic power generation 402b, and the hydraulic power generation 402c, but also from the domestic power generation device 404 (the solar power generation and wind power generation) can be stored in the storage device 403. Therefore, even if the generated power of the domestic power generation device 404 varies, the power amount to be sent to an outside can be controlled to be constant, or can be controlled to be discharged as only needed. For example, the power obtained by the solar power generation can be stored in the storage device 403, and midnight power with a cheap rate can be stored in the storage device 403 during night, and the power stored in the storage device 403 can be discharged and used during daytime where the rate is high.

Note that, here, an example in which the control device 410 is stored in the storage device 403 has been described. However, the control device 410 may be stored in the smart meter 407, or may be independently configured. Further, the storage system 400 may be used for a plurality of homes in an apartment house, or may be used for a plurality of detached houses.

(7-2) Storage System in Vehicle as Application Example

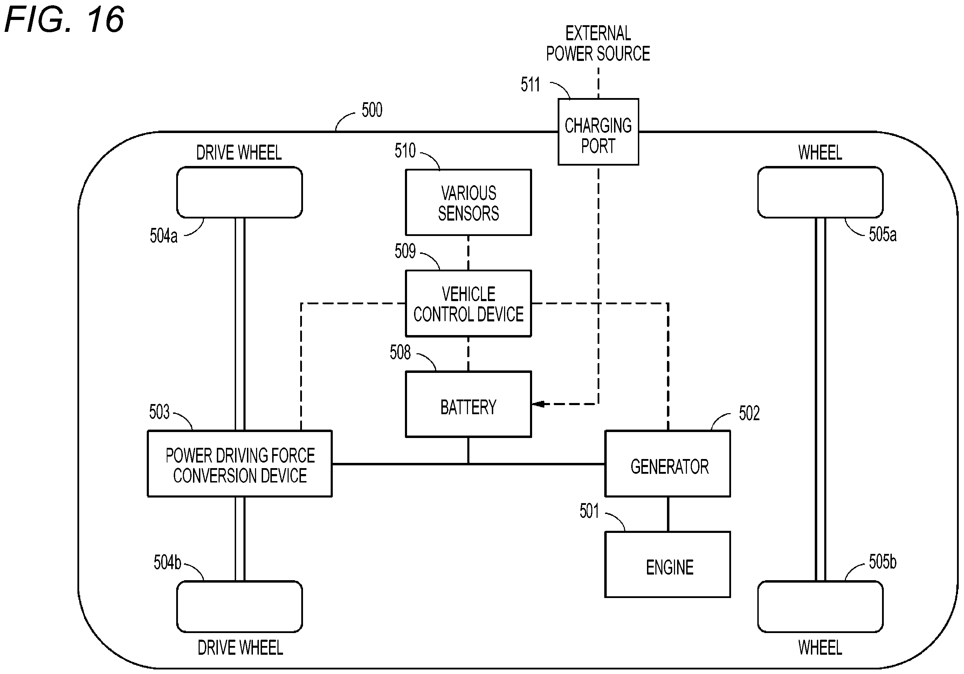

An example in which the present technology is applied to a storage system for vehicles will be described with reference to Fig. 16. Fig. 16 schematically illustrates an example of a configuration of a hybrid vehicle that employs a series hybrid system to which the present technology is applied. The series hybrid system is a car that travels by a power driving force conversion device using power generated by a generator moved by an engine or power stored in a battery once.

In this hybrid vehicle 500, an engine 501, a generator 502, a power driving force conversion device 503, a drive wheel 504a, a drive wheel 504b, a wheel 505a, a wheel 505b, a battery 508, a vehicle control device 509, various sensors 510, and a charging port 511 are mounted. The above-described secondary battery of the present technology is applied to the battery 508.

The hybrid vehicle 500 travels using the power driving force conversion device 503 as a power source. An example of the power driving force conversion device 503 is a motor. The power driving force conversion device 503 is operated by the power of the battery 508, and a rotating force of the power driving force conversion device 503 is transmitted to the drive wheels 504a and 504b. Note that, by use of DC-AC or AC-DC conversion in necessary places, the power driving force conversion device 503 is applicable to both of an AC motor and a DC motor. The various sensors 510 control the engine speed and the opening of a throttle valve (not illustrated) (throttle opening) through the vehicle control device 509. The various sensors 510 include a speed sensor, an acceleration sensor, an engine speed sensor, and the like.

The rotating force of the engine 501 is transmitted to the generator 502, and the power generated by the generator 502 by the rotating force can be accumulated in the battery 508.

When the hybrid vehicle 500 is decelerated by a brake mechanism (not illustrated), a resistance force at the time of deceleration is added to the power driving force conversion device 503 as a rotating force. Regenerative electric power generated by the power driving force conversion device 503 by the rotating force is accumulated in the battery 508.

The battery 508 can receive power supply from an external power source using the charging port 511 as an input port by being connected to the power source outside the hybrid vehicle 500, and can accumulate the received power.

Although not illustrated, an information processing device that performs information processing regarding vehicle control on the basis of information regarding the secondary battery may be included. An example of such an information processing device includes an information processing device that displays a battery remaining amount on the basis of information regarding a remaining amount of the battery.

Note that a series hybrid car that travels by a motor using power generated by a generator operated by an engine or power stored once in a battery has been described as an example. However, the present technology can be effectively applied to a parallel hybrid car that uses outputs of both of an engine and a motor as drive sources, and appropriately switches and uses three systems including travel only with the engine, travel only with the motor, and travel with both of the engine and the motor. Further, the present technology can be effectively applied to a so-called electrically driven vehicle that travels by drive only with a drive motor without using an engine.

[Examples]

Hereinafter, the present technology will be described in detail with examples. Note that the present technology is not limited to configurations of the examples below.

<Example 1-1>

A laminated film secondary battery of Example 1-1 was prepared as follows.

(Positive Electrode Production)

The positive electrode was produced as follows. First, 85 parts by mass of $LiFePO_4$ as the positive electrode active material, 5 parts by mass of polyvinylidene fluoride as the binding agent, 10 parts by mass of carbon as the conducting agent, and extra N-methylpyrrolidone were kneaded by a mixer. N-methylpyrrolidone (NMP) was further added and dispersed so that predetermined viscosity can be obtained, and the positive electrode mixture slurry was obtained. Note that $LiFePO_4$ coated with carbon was used to improve conductivity.

Next, the positive electrode mixture slurry was applied on both surfaces of aluminum foil with the thickness of 15 $\mu$m so that the positive electrode current collector exposed portion is formed, was then dried, and compression molded by a roll press machine or the like, so that the positive electrode active material layer was formed.

(Negative Electrode Production)

The negative electrode was produced as follows. First, 85 parts by mass of $Li_4Ti_5O_{12}$ as the negative electrode active material, 5 parts by mass of polyvinylidene fluoride as the binding agent, 10 parts by mass of carbon as the conducting agent, and extra N-methylpyrrolidone were kneaded, and the negative electrode mixture slurry was obtained. Note that $Li_4Ti_5O_{12}$ coated with carbon was used to improve conductivity.

Next, the negative electrode mixture slurry was applied to both surfaces of aluminum foil with the thickness of 15 $\mu$m, was then dried, and compression molded by a roll press machine or the like, so that the negative electrode active material layer was formed.

Note that, before the positive electrode active material layer and the negative electrode active material layer were respectively applied to and formed on the positive electrode current collector and the negative electrode current collector, (Ac/Aa), ($Q_{A1}/Q_{C1}$), and ($Q_{CL}/Q_{AL}$) were adjusted to become predetermined values by measuring a lithium absorption capacity per weight of the negative electrode mixture and a lithium emission capacity per weight of the positive electrode mixture in advance, and adjusting application amounts of the positive electrode mixture slurry and the negative electrode mixture slurry, and electrode areas. In Example 1-1, adjustment was performed such that (Ac/Aa) = 1.07, ($Q_{A1}/Q_{C1}$) = 1.21, and ($Q_{CL}/Q_{AL}$) = 1.01 are obtained. Note that the lithium absorption capacity per weight of the negative electrode mixture and the lithium emission capacity per weight of the positive electrode mixture were obtained by punching the electrodes after application of the mixture into predetermined sizes, assembling a coin cell using Li metal for a counter electrode, performing charge and discharge, and measuring the capacities. At this time, the current at the time of charge and discharge was 0.2 C worth, and the charge and discharge were performed with a current value of about 0.1 to 1 mA although depending on the area density of the electrodes.

(Battery Element Production)

The battery element was produced as follows. First, electrodes were punched to have predetermined sizes, and a microporous film made of polyethylene and having the thickness of 16 $\mu$m was cut to be larger than the positive electrode, and the separator was obtained. Next, sixteen positive electrodes, fifteen negative electrodes, and thirty separators which were obtained as described above were laminated in the order of the positive electrode, the separator, the negative electrode, ..., the negative electrode, the separator, and the positive electrode, as illustrated in Figs. 2A and 2C. The thickness of the battery element was 5 mm. Note that the upper and lower outermost layers of the battery element were the positive electrode active material layers. However, these portions do not face the negative electrode, and thus do not contribute to a battery reaction. Further, in laminating the electrodes, as illustrated in Fig. 4B, relative positions of the negative electrodes and the positive electrodes were adjusted such that a projection surface of the negative electrode active material layer falls within a projection surface of the positive electrode active material layer, as viewed from the laminating direction.

(Secondary Battery Production)

Next, sixteen positive electrode current collector exposed portions were connected at the same time to a positive electrode tub made of aluminum by means of ultrasonic welding . Similarly, fifteen negative electrode current collector exposed portions were ultrasonic welded at the same time to a negative electrode tub made of aluminum. Next, as the packaging material, two square aluminum laminated films having a laminated structure in which a resin layer made of unstretched polypropylene (CPP), an adhesive layer, aluminum foil, an adhesive layer, and a resin layer made of nylon were laminated in order were prepared. A recessed portion in which the battery element is accommodated was formed in a part of one of the two square aluminum laminated films. Next, the battery element was accommodated in the recessed portion of the one aluminum laminated film such that ends of the positive electrode tub and the negative electrode tub were pulled out to an outside. Next, the remaining aluminum laminated film was layered to cover the recessed portion in which the battery element was accommodated, and the peripheral edge portion except one side was thermally fused to form a bag shape.

Next, an electrolyte solution was prepared by mixing propylene carbonate (PC), dimethyl carbonate (DMC), and lithium hexafluorophosphate (LiPF$_6$) at mass ratios of PC : DMC : LiPF$_6$ = 35 : 50 : 15.

Next, the electrolyte solution was poured through the opening portion (unfused portion) of the bag-like aluminum laminated film, and the battery element was impregnated with the electrolyte solution. Then, the opening portion was thermally fused and sealed. The intended secondary battery was obtained.

<Example 1-2> to <Example 1-4>

Ac, Aa, (Ac/Aa), ($Q_{A1}/Q_{C1}$), and ($Q_{CL}/Q_{AL}$) were adjusted to be the values illustrated in Table 1 below by adjusting application amounts of the positive electrode mixture slurry and the negative electrode mixture slurry, and the electrode areas. The secondary batteries were produced similarly to Example 1-1 except the above matters.

<Comparative Example 1-1> to <Comparative Example 1-4>

Ac, Aa, (Ac/Aa), ($Q_{A1}/Q_{C1}$), and ($Q_{CL}/Q_{AL}$) were adjusted to be the values illustrated in Table 1 below by adjusting the application amounts of the positive electrode mixture slurry and the negative electrode mixture slurry, and the electrode areas. The secondary batteries were produced similarly to Example 1-1 except the above matters.

(Evaluation)

Cycle maintaining rates and thickness increasing rates were measured about the produced secondary batteries.

(Measurement of Cycle Maintaining Rate)

The following cycle test was performed for the produced batteries, and a capacity maintaining rate (a cycle maintaining rate) was obtained. CC-CV charge (constant current-constant voltage charge) was performed for three hours at 23°C with a predetermined charge voltage of 2.3 V and a current of 1 C, then one hour pause was taken, and then discharge was performed up to the voltage of 1 V with a discharge current of 1 C. This operation was repeated twice.

The second discharge was counted as the first cycle, and the discharge capacity at this time was treated as the initial-stage discharge capacity of the battery. The charge and discharge was repeatedly performed under similar conditions, and [the capacity after 500 cycles/the initial-stage discharge capacity] $\times$ 100 (%) was employed as the cycle maintaining rate . Note that 1 C is a current value with which a logical capacity is fully discharged (or charged) in one hour. 0.5 is a current value with which the logical capacity is fully discharged (charged) in two hours.

(Measurement of Thickness Increasing Rate)

The cell thickness before the cycle test and the cell thickness after the cycle test were measured about the secondary batteries for which the cycle test was performed, and an increasing rate of the cell thickness was obtained by {(the cell thickness in the 500th cycle)/the cell thickness after the first charge and discharge} $\times$ 100(%).
Evaluation results are illustrated in Table 1.

[Table 1]

| | Positive electrode area density [mg/cm$^2$] | Negative electrode area density [mg/cm$^2$] | Positive electrode area (Ac) [cm$^2$] | Negative electrode area (Aa) [cm$^2$] | Ac/Aa | $Q_{A1}/Q_{C1}$ | $Q_{CL}/Q_{AL}$ | Cell thickness increasing rate [%] | Cycle maintaining rate [%] |
|---|---|---|---|---|---|---|---|---|---|
| Example 1-1 | 7.4 | 8.5 | 40 | 37.4 | 1.07 | 1.21 | 1.01 | 101 | 99 |
| Example 1-2 | 7.4 | 8.5 | 40 | 39.8 | 1.01 | 1.21 | 0.95 | 101 | 99 |
| Example 1-3 | 7.9 | 8.5 | 40 | 37.4 | 1.07 | 1.13 | 1.08 | 105 | 99 |
| Example 1-4 | 6.7 | 8.5 | 40 | 37.4 | 1.07 | 1.33 | 0.92 | 103 | 99 |
| Comparative Example 1-1 | 7.4 | 8.5 | 40 | 47 | 0.85 | 1.08 | 0.95 | 103 | 92 |
| Comparative Example 1-2 | 8 | 8.5 | 40 | 33.8 | 1.18 | 1.08 | 1.05 | 240 | 85 |
| Comparative Example 1-3 | 8.3 | 8.5 | 40 | 37.4 | 1.07 | 1.08 | 1.14 | 140 | 93 |
| Comparative Example 1-4 | 6 | 8.5 | 40 | 37.4 | 1.07 | 1.49 | 0.82 | 150 | 93 |
| $Q_{C1}$: First positive electrode charge capacity per unit area $Q_{A1}$: First negative electrode charge capacity per unit area $Q_{CL}$: Irreversible capacity per unit area of positive electrode $Q_{AL}$: Irreversible capacity per unit area of negative electrode | | | | | | | | | |

As illustrated in Table 1, it has been found that, in the secondary batteries of Examples 1-1 to 1-4, which satisfy the formulas (A) to (C), the cycle characteristics are favorable, and the thickness increasing rate is small and the generation of gasses can be suppressed. Meanwhile, the secondary batteries of Comparative Examples 1-1 to 1-4 do not satisfy any one of the formulas (A) to (C), and were not able to sufficiently suppress at least either the generation of gasses or deterioration of cycle characteristics. Note that, in Comparative Example 1-2, by repeating the cycle, a residual capacity of a region (called clearance portion of the positive electrode) not facing the negative electrode active material layer, of the positive electrode active material layer, is added to the initial-stage capacity, and thus the electrode that defines the charge termination was switched from the positive electrode to the negative electrode. Therefore, the generation of gasses and the deterioration of cycle characteristics were not able to be sufficiently suppressed. In the secondary battery that does not satisfy the formula (B) like Comparative Example 1-2, the electrode area of the negative electrode is considerably smaller than the electrode area of the positive electrode, and the clearance portion of the positive electrode is large. Such a secondary battery has a tendency that, if the cycle is repeated, the clearance portion of the positive electrode begins to be used little by little, the positive electrode capacity is more increased than that in the cycle initial stage with the repetition of the cycle, the difference between the negative electrode capacity and the positive electrode capacity becomes smaller than that in the cycle initial stage, and eventually, the magnitude of the positive electrode capacity and the magnitude of the negative electrode capacity are reversed (that is, the positive electrode capacity becomes larger than the negative electrode capacity).

<Example 2-1> to <Example 2-4> and <Comparative Example 2-1> to <Comparative Example 2-3>

$LiMn_{0.75}Fe_{0.25}PO_4$ was used as the positive electrode active material. Ac, Aa, (Ac/Aa), $(Q_{A1}/Q_{C1})$, and $(Q_{CL}/Q_{AL})$ were adjusted to be the values illustrated in Table 2 below by adjusting the application amounts of the positive electrode mixture slurry and the negative electrode mixture slurry, and the electrode areas. The secondary batteries were produced similarly to Example 1-1 except the above matters.

(Evaluation)

The cycle maintaining rate and the thickness increasing rate were measured about the produced secondary batteries of Examples and Comparative Examples, similarly to Example 1-1.

Evaluation results are illustrated in Table 2.

[Table 2]

| | Positive electrode area density [mg/cm$^2$] | Negative electrode area density [mg/cm$^2$] | Positive electrode area (Ac) [cm$^2$] | Negative electrode area (Aa) [cm$^2$] | Ac/Aa | $Q_{A1}/Q_{C1}$ | $Q_{CL}/Q_{AL}$ | Cell thickness increasing rate [%] | Cycle maintaining rate [%] |
|---|---|---|---|---|---|---|---|---|---|
| Example 2-1 | 7.3 | 8.5 | 40 | 37.4 | 1.07 | 1.16 | 1 | 115 | 97 |
| Example 2-2 | 7.9 | 8.5 | 40 | 37.4 | 1.07 | 1.08 | 1.08 | 140 | 96 |
| Example 2-3 | 6.6 | 8.5 | 40 | 37.4 | 1.07 | 1.29 | 0.9 | 140 | 96 |
| Example 2-4 | 7.3 | 8.5 | 40 | 39.8 | 1.01 | 1.08 | 1.02 | 115 | 97 |
| Comparative Example 2-1 | 10 | 8.5 | 40 | 50 | 0.80 | 0.85 | 1.03 | 117 | 90 |
| Comparative Example 2-2 | 8 | 8.5 | 40 | 37.5 | 1.07 | 1.06 | 1.09 | 280 | 78 |
| Comparative Example 2-3 | 6 | 8.5 | 40 | 37.4 | 1.07 | 1.42 | 0.82 | 170 | 89 |

$Q_{C1}$: First positive electrode charge capacity per unit area
$Q_{A1}$: First negative electrode charge capacity per unit area
$Q_{CL}$: Irreversible capacity per unit area of positive electrode
$Q_{AL}$: Irreversible capacity per unit area of negative electrode

As illustrated in Table 2, in the secondary batteries of Examples 2-1 to 2-4, which satisfy the formulas (A) to (C), it has been found that the cycle characteristics are favorable, and the thickness increasing rate is small and the generation of gasses can be suppressed. Meanwhile, the secondary batteries of Comparative Examples 2-1 to 2-3 do not satisfy any one of the formulas (A) to (C), and were not able to sufficiently suppress at least either the generation of gasses or deterioration of cycle characteristics.

<Example 3-1> to <Example 3-4> and <Comparative Example 3-1> to <Comparative Example 3-3>

$LiMn_2O4$ was used as the positive electrode active material. Ac, Aa, (Ac/Aa), $(Q_{A1}/Q_{C1})$, and $(Q_{CL}/Q_{AL})$ were adjusted to be the values illustrated in Table 3 below by adjusting the application amounts of the positive electrode mixture slurry and the negative electrode mixture slurry, and the electrode areas. The secondary batteries were produced similarly to Example 1-1 except the above matters.

(Evaluation)

The cycle maintaining rate and the thickness increasing rate were measured about the produced secondary batteries of Examples and Comparative Examples, similarly to Example 1-1.

Evaluation results are illustrated in Table 3.

[Table 3]

| | Positive electrode area density [mg/cm²] | Negative electrode area density [mg/cm²] | Positive electrode area (Ac) [cm²] | Negative electrode area (Aa) [cm²] | Ac/Aa | $Q_{A1}/Q_{C1}$ | $Q_{CL}/Q_{AL}$ | Cell thickness increasing rate [%] | Cycle maintaining rate [%] |
|---|---|---|---|---|---|---|---|---|---|
| Example 3-1 | 9.5 | 8.5 | 40 | 37.4 | 1.07 | 1.22 | 1 | 105 | 97 |
| Example 3-2 | 9.5 | 8.5 | 40 | 39.8 | 1.01 | 1.22 | 0.94 | 105 | 97 |
| Example 3-3 | 10.4 | 8.5 | 40 | 37.4 | 1.07 | 1.12 | 1.09 | 110 | 96 |
| Example 3-4 | 8.6 | 8.5 | 40 | 37.4 | 1.07 | 1.35 | 0.9 | 110 | 96 |
| Comparative Example 3-1 | 12 | 8.5 | 40 | 50 | 0.80 | 0.97 | 0.94 | 106 | 92 |
| Comparative Example 3-2 | 11 | 8.5 | 40 | 37.4 | 1.07 | 1.06 | 1.15 | 220 | 83 |
| Comparative Example 3-3 | 8 | 8.5 | 40 | 37.4 | 1.07 | 1.45 | 0.84 | 130 | 90 |

$Q_{C1}$: First positive electrode charge capacity per unit area
$Q_{A1}$: First negative electrode charge capacity per unit area
$Q_{CL}$: Irreversible capacity per unit area of positive electrode
$Q_{AL}$: Irreversible capacity per unit area of negative electrode

EP 3 128 594 B1

As illustrated in Table 3, it has been found that, in the secondary batteries of Examples 3-1 to 3-4, which satisfy the formulas (A) to (C), the cycle characteristics are favorable, and the thickness increasing rate is small and the generation of gasses can be suppressed. Meanwhile, the secondary batteries of Comparative Examples 3-1 to 3-3 do not satisfy at least any of the formulas (A) to (C), and were not able to sufficiently suppress at least either the generation of gasses or deterioration of cycle characteristics.

<Example 4-1> to <Example 4-4> and <Comparative Example 4-1> to <Comparative Example 4-4>

The positive electrode and the negative electrode were produced similarly to Example 1-1. The positive electrode lead was attached to the positive electrode current collector exposed portion, and the negative electrode lead was attached to the negative electrode current collector exposed portion. Accordingly, the positive electrode and the negative electrode were obtained. Note that, in producing the positive electrode and the negative electrode, Ac, Aa, (Ac/Aa), $(Q_{A1}/Q_{C1})$, and $(Q_{CL}/Q_{AL})$ were adjusted to be the values illustrated in Table 4 below by adjusting the application amounts of the positive electrode mixture slurry and the negative electrode mixture slurry, and the electrode areas.

(Separator)

As the separator, a microporous film (polyethylene separator) made of polyethylene (PE), which was cut to have the thickness 16 mm and to become larger than the positive electrode width, was used.
Polyvinylidene fluoride (PVdF) was dispersed in N-methyl-2-pyrrolidone (NMP), and the matrix resin solution was prepared.
Next, the matrix resin solution was applied on both surfaces of the separator, and was then tried, so that the NMP was removed from the matrix resin solution. The separator with both surfaces where the matrix high molecular compound layer made of PVdF had been formed was produced.

[Assembly of Secondary Battery]

The positive electrodes, the negative electrodes, and the separators with both surfaces where the matrix high molecular compound layer had been formed were laminated in the order of the positive electrode, the separator, the negative electrode, and the separator, and were wound in a longitudinal direction in a flat shape manner a large number of times, and a finished portion was fixed with an adhesive tape, so that a wound electrode body was formed.
Next, the wound electrode body was sandwiched between the packaging materials, and three sides were thermally fused. Note that, as the packaging material, two aluminum laminated film similar to those of Example 1-1 were used.
Following that, an electrolyte solution similar to that of Example 1-1 was poured, and the remaining one side was thermally fused and sealed under decompression. At this time, the matrix high molecular compound layer was impregnated with the electrolyte solution, and PVdF as the matrix high molecular compound layer swelled and a gel electrolyte (gel electrolyte layer) was formed. The intended secondary battery was obtained.

(Evaluation)

The cycle maintaining rate and the thickness increasing rate were measured about the produced secondary batteries of Examples and Comparative Examples, similarly to Example 1-1.
Evaluation results are illustrated in Table 4.

[Table 4]

|  | Positive electrode area density [mg/cm²] | Negative electrode area density [mg/cm²] | Positive electrode area (Ac) [cm²] | Negative electrode area (Aa) [cm²] | Ac/Aa | $Q_{A1}/Q_{C1}$ | $Q_{CL}/Q_{AL}$ | Cell thickness increasing rate [%] | Cycle maintaining rate [%] |
|---|---|---|---|---|---|---|---|---|---|
| Example 4-1 | 16 | 18 | 400 | 378 | 1.06 | 1.18 | 0.97 | 103 | 99 |
| Example 4-2 | 16 | 18 | 400 | 395 | 1.01 | 1.18 | 0.97 | 103 | 99 |
| Example 4-3 | 17.7 | 18 | 400 | 378 | 1.06 | 1.07 | 1.07 | 106 | 99 |
| Example 4-4 | 15 | 18 | 400 | 378 | 1.06 | 1.26 | 0.91 | 105 | 99 |
| Comparative Example 4-1 | 17 | 18 | 400 | 440 | 0.91 | 1.11 | 1.03 | 104 | 92 |
| Comparative Example 4-2 | 18 | 18 | 400 | 378 | 1.06 | 1.05 | 1.09 | 260 | 85 |
| Comparative Example 4-3 | 18.5 | 18 | 400 | 395 | 1.01 | 1.21 | 1.12 | 150 | 93 |
| Comparative Example 4-4 | 13 | 18 | 400 | 378 | 1.06 | 1.45 | 0.79 | 155 | 93 |

$Q_{C1}$: First positive electrode charge capacity per unit area
$Q_{A1}$: First negative electrode charge capacity per unit area
$Q_{CL}$: Irreversible capacity per unit area of positive electrode
$Q_{AL}$: Irreversible capacity per unit area of negative electrode

As illustrated in Table 4, it has been found that, in the secondary batteries of Examples 4-1 to 4-4, which satisfy the formulas (A) to (C), the cycle characteristics are favorable, and the thickness increasing rate is small and the generation of gasses can be suppressed. Meanwhile, the secondary batteries of Comparative Examples 4-1 to 4-4 do not satisfy any one of the formulas (A) to (C), and were not able to sufficiently suppress at least either the generation of gasses or deterioration of cycle characteristics.

<Example 5-1> to <Example 5-4> and <Comparative Example 5-1> to <Comparative Example 5-4>

(Production of Positive Electrode)

Positive electrode mixture slurry similar to that of Example 1-1 was prepared, and the positive electrode mixture slurry was applied on both surfaces of the positive electrode current collector made of beltlike aluminum foil. Following that, the dispersion medium of the applied positive electrode mixture slurry was vaporized and dried, and the positive electrode current collector was compression molded by the roll press, so that the positive electrode active material layer was formed. Finally, the positive electrode lead made of aluminum was attached to the positive electrode current collector exposed portion, and the positive electrode was formed.

(Production of Negative Electrode)

Negative electrode mixture slurry similar to that of Example 1-1 was prepared, and the negative electrode mixture slurry was applied on both surfaces of the negative electrode current collector made of beltlike aluminum foil such that a part of the negative electrode current collector is exposed. Following that, the dispersion medium of the applied negative electrode mixture slurry was vaporized and dried, and the negative electrode current collector was compression molded by roll press, so that the negative electrode active material layer was formed. Finally, the negative electrode lead made of nickel was attached to the negative electrode current collector exposed portion, and the negative electrode was formed. Note that, in producing the positive electrode and the negative electrode, Ac, Aa, (Ac/Aa), $(Q_{A1}/Q_{C1})$, and $(Q_{CL}/Q_{AL})$ were adjusted to be the values illustrated in Table 5 below by adjusting the application amounts of the positive electrode mixture slurry and the negative electrode mixture slurry, and the electrode areas.

(Preparation of Electrolyte Solution)

An electrolyte solution similar to that of Example 1-1 was prepared.

(Assembly of Cell)

Next, the separator was wound while sandwiching the positive electrode and the negative electrode, so that a wound electrode body was obtained. Next, the wound electrode body was inserted into the battery can. The negative electrode lead was connected to the can bottom of the battery can by resistance welding, and the positive electrode lid was connected to the positive electrode lead by ultrasonic welding. Next, an electrolyte solution similar to that of Example 1-1 was poured. Following that, the positive electrode lid was caulked in the battery can and sealed, and the intended cylinder type secondary battery (18650 size) was obtained.

(Evaluation)

The cycle maintaining rates of the produced secondary batteries of Examples and Comparative Examples were measured, similarly to Example 1-1.
Evaluation results are illustrated in Table 5.

[Table 5]

| | Positive electrode area density [mg/cm$^2$] | Negative electrode area density [mg/cm$^2$] | Positive electrode area (Ac) [cm$^2$] | Negative electrode area (Aa) [cm$^2$] | Ac/Aa | $Q_{A1}/Q_{C1}$ | $Q_{CL}/Q_{AL}$ | Cycle maintaining rate [%] |
|---|---|---|---|---|---|---|---|---|
| Example 5-1 | 20 | 23 | 1044 | 1006 | 1.04 | 1.21 | 0.98 | 99 |
| Example 5-2 | 20 | 23 | 1044 | 1030 | 1.01 | 1.21 | 0.96 | 99 |
| Example 5-3 | 22 | 23 | 1044 | 1006 | 1.04 | 1.1 | 1.08 | 97 |
| Example 5-4 | 18.5 | 23 | 1044 | 1006 | 1.04 | 1.31 | 0.91 | 97 |
| Comparative Example 5-1 | 20 | 23 | 1044 | 1100 | 0.95 | 1.21 | 0.9 | 93 |
| Comparative Example 5-2 | 22 | 23 | 1044 | 944 | 1.11 | 1.1 | 1.15 | 91 |
| Comparative Example 5-3 | 23 | 23 | 1044 | 1006 | 1.04 | 1.05 | 1.13 | 93 |
| Comparative Example 5-4 | 18 | 23 | 1044 | 1006 | 1.04 | 1.34 | 0.89 | 93 |

$Q_{C1}$: First positive electrode charge capacity per unit area
$Q_{A1}$: First negative electrode charge capacity per unit area
$Q_{CL}$: Irreversible capacity per unit area of positive electrode
$Q_{AL}$: Irreversible capacity per unit area of negative electrode

As illustrated in Table 5, in the secondary batteries of Examples 5-1 to 5-4, which satisfy the formulas (A) to (C), the cycle characteristics are favorable. Note that, in Examples 5-1 to 5-4, the secondary batteries are those using a cylindrical can as the packaging material, and swelling due to generation of gasses is less likely to occur. Therefore, it is difficult to evaluate the generation of gasses suppression effect by the swelling of the packaging material, and thus evaluation of the generation of gasses suppression effect was not performed. However, the generation of gasses suppression effect is not denied. The secondary batteries of Examples 5-1 to 5-4, which satisfy the formulas (A) to (C), exhibit the generation of gasses suppression effect, similarly to Example 1-1 and the like above.

8. Other Embodiment

The present technology is not limited to the above-described embodiments and examples of the present technology, and various modifications and applications are possible.

For example, the numerical values, structures, shapes, materials, row materials, manufacturing processes, and the like described in the above-described embodiments and examples are mere examples, and numerical values, structures, shapes, materials, row materials, manufacturing processes, and the like different from the aforementioned embodiments and examples may be used as needed.

Further, the configurations, methods, processes, shapes, materials, numerical values, and the like of the above-described embodiments and examples can be combined with one another.

The present technology can take configurations below.

[1] A secondary battery including:

a positive electrode including a positive electrode active material layer having a positive electrode active material;
a negative electrode including a negative electrode active material layer having a negative electrode active material; and an electrolyte, wherein
the positive electrode active material contains at least either a lithium iron phosphate compound having an olivine structure and containing at least lithium, iron, and phosphorus, or lithium-manganese composite oxide having a spinel structure and containing at least lithium and manganese,
the negative electrode active material contains titanium-containing inorganic oxide, and
the secondary battery satisfies Formula (A), Formula (B), and Formula (C) below:

$$\text{Formula (A)}$$
$$1.005 \leq (Ac/Aa)$$

(in the formula, Ac: an electrode area (cm$^2$) of the positive electrode and Aa: an electrode area (cm$^2$) of the negative electrode);

$$\text{Formula (B)}$$
$$(Ac/Aa) < (Q_{A1}/Q_{C1})$$

(in the formula, $Q_{C1}$ (mAh/cm$^2$): a first positive electrode charge capacity per unit area and $Q_{A1}$ (mAh/cm$^2$): a first negative electrode charge capacity per unit area); and

$$\text{Formula (C)}$$
$$0.90 \leq (Q_{CL}/Q_{AL}) \leq 1.10$$

(in the formula, $Q_{CL}$ (mAh/cm$^2$): an irreversible capacity per unit area of the positive electrode and $Q_{AL}$ (mAh/cm$^2$): an irreversible capacity per unit area of the negative electrode) .

[2] The secondary battery according to [1], wherein
the (Ac/Aa) satisfies (Ac/Aa) ≤ 1.50.
[3] The secondary battery according to [1] or [2], wherein
the lithium iron phosphate compound is a lithium iron phosphate compound expressed by a following (Chemical Formula 1) :

(Chemical Formula 1) $Li_uFe_rM1_{(1-r)}PO_4$

(in the formula, M1 expresses at least one type of a group composed of cobalt (Co), manganese (Mn), nickel (Ni), magnesium (Mg), aluminum (Al), boron (B), titanium (Ti), vanadium (V), niobium (Nb), copper (Cu), zinc (Zn), molybdenum (Mo), calcium (Ca), strontium (Sr), tungsten (W), and zirconium (Zr). r is a value in a range of $0 < r \leq 1$. u is a value in a range of $0.9 \leq u \leq 1.1$. Note that a composition of lithium differs depending on a state of charge and discharge, and the value of u expresses a value in a fully discharged state).

[4] The secondary battery according to [3], wherein

the lithium iron phosphate compound is at least either $Li_uFePO_4$ (u is synonymous with the aforementioned u) or $Li_uFe_rMn_{(1-r)}PO_4$ (u is synonymous with the aforementioned u. r is synonymous with the aforementioned r).

[5] The secondary battery according to any one of [1] to [4], wherein

the lithium-manganese composite oxide is a lithium-manganese composite oxide expressed by a following (Chemical Formula 2):

(Chemical Formula 2) $Li_vMn_{(2-w)}M2_wO_s$

(in the formula, M2 expresses at least one type of a group composed of cobalt (Co), nickel (Ni), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), and tungsten (W). v, w, and s are values in ranges of $0.9 \leq v \leq 1.1$, $0 \leq w \leq 0.6$, and $3.7 \leq s \leq 4.1$. Note that a composition of lithium differs depending on a state of charge and discharge, and the value of v expresses a value in a fully discharged state).

[6] The secondary battery according to [5], wherein

the lithium-manganese composite oxide is $Li_vMn_2O_4$ (v is synonymous with the aforementioned v).

[7] The secondary battery according to any one of [1] to [6], wherein

the titanium-containing inorganic oxide is at least one of titanium-containing lithium composite oxides expressed by following (Chemical Formula 3) to (Chemical Formula 5) and $TiO_2$:

(Chemical Formula 3) $Li[Li_xM3_{(1-3x)/2}Ti_{(3+x)/2}]O_4$

(M3 is at least one type of Mg, Ca, Cu, Zn, and Sr, and x satisfies $0 \leq x \leq 1/3$) ;

(Chemical Formula 4) $Li[Li_yM4_{1-3y}Ti_{1+2y}]O_4$

(M4 is at least one type of Al, Sc, Cr, Mn, Fe, Ga, and Y, and y satisfies $0 \leq y \leq 1/3$); and

(Chemical Formula 5) $Li[Li_{1/3}M5_zTi_{(5/3)-z}]O_4$

(M5 is at least one type of V, Zr, and Nb, and z satisfies $0 \leq z \leq 2/3$).

[8] The secondary battery according to any one of [1] to [7], further including:

a packaging material that packages a battery element including at least the positive electrode and the negative electrode, wherein
the packaging material is a film packaging material.

[9] The secondary battery according to [8], wherein the battery element has a laminated electrode structure or a wound electrode structure.

[10] The secondary battery according to any one of [1] to [9], further including:

a separator existing between the positive electrode and the negative electrode.

[11] A secondary battery including:

a positive electrode including a positive electrode active material layer having a positive electrode active material;
a negative electrode including a negative electrode active material layer having a negative electrode active material; and
an electrolyte, wherein
a curve indicating change of a potential with respect to a capacity (V vs. Li/Li$^+$), of the positive electrode active material, has at least a plateau region and a potential rising region in which the potential drastically rises and changes in a charge end stage,

the negative electrode active material contains titanium-containing inorganic oxide, and
the secondary battery satisfies Formula (A), Formula (B), and Formula (C) below:

$$\text{Formula (A)}$$

$$1.005 \leq (Ac/Aa)$$

(in the formula, Ac: an electrode area (cm$^2$) of the positive electrode and Aa: an electrode area (cm$^2$) of the negative electrode);

$$\text{Formula (B)}$$

$$(Ac/Aa) < (Q_{A1}/Q_{C1})$$

(in the formula, $Q_{C1}$ (mAh/cm$^2$) : a first positive electrode charge capacity per unit area and $Q_{A1}$ (mAh/cm$^2$) : a first negative electrode charge capacity per unit area); and

$$\text{Formula (C)}$$

$$0.90 \leq (Q_{CL}/Q_{AL}) \leq 1.10$$

(in the formula, $Q_{CL}$ (mAh/cm$^2$): an irreversible capacity per unit area of the positive electrode and $Q_{AL}$ (mAh/cm$^2$) : an irreversible capacity per unit area of the negative electrode) .

[12] A battery pack including:

the secondary battery according to any one of [1] to [11] ;
a control unit configured to control the secondary battery; and
a package that involves the secondary battery.

[13] An electronic device including:

the secondary battery according to any one of [1] to [11], and
the electronic device configured to receive supply of power from the secondary battery.

[14] An electrically driven vehicle including:

the secondary battery according to any one of [1] to [11] ;
a conversion device configured to receive supply of power from the secondary battery and convert the power into driving force of a vehicle; and
a control device configured to perform information processing regarding vehicle control on the basis of information regarding the secondary battery.

[15] A storage device including:

the secondary battery according to any one of [1] to [11], and
the storage device configured to supply power to an electronic device connected to the secondary battery.

[16] The storage device according to [15], further including:

a power information control device configured to transmit/receive a signal to/from another device through a network, and
the storage device performing charge and discharge control of the secondary battery on the basis of information received by the power information control device.

[17] A power system, wherein
power is supplied from the secondary battery according to any one of [1] to [11], or power is supplied from a power generation device or a power network to the secondary battery.

REFERENCE SIGNS LIST

| 4 | Positive electrode |
|---|---|
| 4A | Positive electrode current collector |
| 4B | Positive electrode active material layer |
| 4C | Positive electrode current collector exposed portion |
| 5 | Negative electrode |
| 5A | Negative electrode current collector |
| 5B | Negative electrode active material layer |
| 5C | Negative electrode current collector exposed portion |
| 6 | Separator |
| 31 | Packaging material |
| 31A | First packaging portion |
| 31B | Second packaging portion |
| 32 | Positive electrode tub |
| 33 | Negative electrode tub |
| 34 | Adhesive film |
| 35 | Fixing member |
| 36 | Recessed portion |
| 40 | Battery element |
| 50 | Wound electrode body |
| 52 | Positive electrode lead |
| 53 | Negative electrode lead |
| 54 | Positive electrode |
| 54A | Positive electrode current collector |
| 54B | Positive electrode active material layer |
| 55 | Negative electrode |
| 55A | Negative electrode current collector |
| 55B | Negative electrode active material layer |
| 56 | Separator |
| 57 | Electrolyte layer |
| 58 | Protective tape |
| 60 | Packaging material |
| 61 | Adhesive film |
| 66 | Separator |
| 81 | Battery can |
| 82 and 83 | Insulating plate |
| 84 | Battery lid |
| 85 | Safety valve mechanism |
| 85A | Disk plate |
| 86 | Thermosensitive resistance element |
| 87 | Gasket |
| 90 | Wound electrode body |
| 91 | Positive electrode |
| 91A | Positive electrode current collector |
| 91B | Positive electrode active material layer |
| 92 | Negative electrode |
| 92A | Negative electrode current collector |
| 92B | Negative electrode active material layer |
| 93 | Separator |
| 94 | Center pin |
| 95 | Positive electrode lead |
| 96 | Negative electrode lead |
| 101 | Battery cell |
| 101a | Terrace portion |
| 102a | Tub |

| 102b | Tub |
|------|-----|
| 103a | Insulating tape |
| 103b | Insulating tape |
| 103c | Insulating tape |
| 104 | Insulating plate |
| 105 | Circuit board |
| 106 | Connector |
| 301 | Assembled battery |
| 301a | Secondary battery |
| 302a | Charge control switch |
| 302b | Diode |
| 303a | Discharge control switch |
| 303b | Diode |
| 304 | Switch unit |
| 307 | Current detection resistance |
| 308 | Temperature detection element |
| 310 | Control unit |
| 311 | Voltage detection unit |
| 313 | Current measurement unit |
| 314 | Switch control unit |
| 317 | Memory |
| 318 | Temperature detection unit |
| 321 | Positive electrode terminal |
| 322 | Negative electrode lead |
| 400 | Storage system |
| 401 | House |
| 402 | Centralized power system |
| 402a | Thermal power generation |
| 402b | Atomic power generation |
| 402c | Hydraulic power generation |
| 403 | Storage device |
| 404 | Power generation device |
| 405 | Power consuming device |
| 405a | Refrigerator |
| 405b | Air conditioner |
| 405c | Television |
| 405d | Bath |
| 406 | Electrically driven vehicle |
| 406a | Electric car |
| 406b | Hybrid car |
| 406c | Electric motorcycle |
| 407 | Smart meter |
| 408 | Power hub |
| 409 | Power network |
| 410 | Control device |
| 411 | Sensor |
| 412 | Information network |
| 413 | Server |
| 500 | Hybrid vehicle |
| 501 | Engine |
| 502 | Generator |
| 503 | Power driving force conversion device |
| 504a | Drive wheel |
| 504b | Drive wheel |
| 505a | Wheel |
| 505b | Wheel |
| 508 | Battery |
| 509 | Vehicle control device |

510     Sensor
511     Charging port

## Claims

1. A secondary battery comprising:

   a positive electrode including a positive electrode active material layer having a positive electrode active material;
   a negative electrode including a negative electrode active material layer having a negative electrode active material; and
   an electrolyte, wherein
   the positive electrode active material contains at least either a lithium iron phosphate compound having an olivine structure and containing at least lithium, iron, and phosphorus, or lithium-manganese composite oxide having a spinel structure and containing at least lithium and manganese,
   the negative electrode active material contains titanium-containing inorganic oxide, and
   the secondary battery satisfies Formula (A), Formula (B), and Formula (C) below:

$$\text{Formula (A)}$$

$$1.005 \leq (Ac/Aa)$$

   wherein Ac is an electrode area ($cm^2$) of the positive electrode and Aa is an electrode area ($cm^2$) of the negative electrode);

$$\text{Formula (B)}$$

$$(Ac/Aa) < (Q_{A1}/Q_{C1})$$

   wherein $Q_{C1}$ ($mAh/cm^2$) is a first positive electrode charge capacity per unit area and $Q_{A1}$ ($mAh/cm^2$) is a first negative electrode charge capacity per unit area; and

$$\text{Formula (C)}$$

$$0.90 \leq (Q_{CL}/Q_{AL}) \leq 1.10$$

   wherein $Q_{CL}$ ($mAh/cm^2$) is an irreversible capacity per unit area of the positive electrode and $Q_{AL}$ ($mAh/cm^2$) is an irreversible capacity per unit area of the negative electrode), wherein $Q_{CL}$ and $Q_{AL}$ are measured using a coin cell having a Li metal counter electrode.

2. The secondary battery according to claim 1, wherein
   the (Ac/Aa) satisfies (Ac/Aa) $\leq$ 1.50.

3. The secondary battery according to claim 1 or 2, wherein
   the lithium iron phosphate compound is a lithium iron phosphate compound expressed by a following (Chemical Formula 1):

   (Chemical Formula 1)     $Li_uFe_rM1_{(1-r)}PO_4$

   wherein, M1 expresses at least one type of a group composed of cobalt (Co), manganese (Mn), nickel (Ni), magnesium (Mg), aluminum (Al), boron (B), titanium (Ti), vanadium (V), niobium (Nb), copper (Cu), zinc (Zn), molybdenum (Mo), calcium (Ca), strontium (Sr), tungsten (W), and zirconium (Zr). r is a value in a range of $0 < r \leq 1$. u is a value in a range of $0.9 \leq u \leq 1.1$, and wherein a composition of lithium differs depending on a state of charge and discharge, and the value of u expresses a value in a fully discharged state.

4. The secondary battery according to claim 3, wherein
   the lithium iron phosphate compound is at least either $Li_uFePO_4$, wherein u is synonymous with the aforementioned u) or $Li_uFe_rMn_{(1-r)}PO_4$, wherein u is synonymous with the aforementioned u and r is synonymous with the aforementioned r.

5. The secondary battery according to any preceding claim, wherein
the lithium-manganese composite oxide is a lithium-manganese composite oxide expressed by a following (Chemical Formula 2):

$$(Chemical\ Formula\ 2) \qquad Li_vMn_{(2-w)}M2_wO_s$$

wherein, M2 expresses at least one type of a group composed of cobalt (Co), nickel (Ni), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), and tungsten (W). v, w, and s are values in ranges of $0.9 \leq v \leq 1.1$, $0 \leq w \leq 0.6$, and $3.7 \leq s \leq 4.1$, and wherein a composition of lithium differs depending on a state of charge and discharge, and the value of v expresses a value in a fully discharged state, in parituclar, wherein
the lithium-manganese composite oxide is $Li_vMn_2O_4$, wherein v is synonymous with the aforementioned v.

6. The secondary battery according to any preceding claim, wherein
the titanium-containing inorganic oxide is at least one of titanium-containing lithium composite oxides expressed by following (Chemical Formula 3) to (Chemical Formula 5) and $TiO_2$:

$$(Chemical\ Formula\ 3) \qquad Li[Li_xM3_{(1-3x)/2}Ti_{(3+x)/2}]O_4$$

wherein M3 is at least one type of Mg, Ca, Cu, Zn, and Sr, and x satisfies $0 \leq x \leq 1/3$;

$$(Chemical\ Formula\ 4) \qquad Li[Li_yM4_{1-3y}Ti_{1+2y}]O_4$$

wherein M4 is at least one type of Al, Sc, Cr, Mn, Fe, Ga, and Y, and y satisfies $0 \leq y \leq 1/3$; and

$$(Chemical\ Formula\ 5) \qquad Li[Li_{1/3}M5_zTi_{(5/3)-z}]O_4$$

wherein M5 is at least one type of V, Zr, and Nb, and z satisfies $0 \leq z \leq 2/3$.

7. The secondary battery according to any preceding claim, further comprising:

a packaging material that packages a battery element including at least the positive electrode and the negative electrode, in particular having a laminated electrode structure or a wound electrode structure, wherein the packaging material is a film packaging material.

8. The secondary battery according to any preceding claim, further comprising:

a separator existing between the positive electrode and the negative electrode.

9. A battery pack comprising:

the secondary battery according to any one of claims 1 to 8;
a control unit configured to control the secondary battery; and
a package that involves the secondary battery.

10. An electronic device comprising:

the secondary battery according to any one of claims 1 to 8, and
the electronic device configured to receive supply of power from the secondary battery.

11. An electrically driven vehicle comprising:

the secondary battery according to any of claims 1 to 8;
a conversion device configured to receive supply of power from the secondary battery and convert the power into driving force of a vehicle; and
a control device configured to perform information processing regarding vehicle control on the basis of information regarding the secondary battery.

12. A storage device comprising:

the secondary battery according to any one of claims 1 to 8, and
the storage device configured to supply power to an electronic device connected to the secondary battery.

13. The storage device according to claim 12, further comprising:
a power information control device configured to transmit/receive a signal to/from another device through a network, and
the storage device performing charge and discharge control of the secondary battery on the basis of information received by the power information control device.

14. A power system, wherein
power is supplied from the secondary battery according to any one of claims 1 to 8, or power is supplied from a power generation device or a power network to the secondary battery.

**Patentansprüche**

1. Sekundärbatterie, aufweisend:

eine positive Elektrode, die eine positive Elektrodenaktivmaterialschicht mit einem positiven Elektrodenaktivmaterial enthält;
eine negative Elektrode, die eine negative Elektrodenaktivmaterialschicht mit einem negativen Elektrodenaktivmaterial enthält; und
einen Elektrolyten, wobei
das positive Elektrodenaktivmaterial zumindest entweder eine Lithiumeisenphosphatverbindung mit einer Olivinstruktur und zumindest Lithium, Eisen und Phosphor beinhaltend, oder Lithium-Mangan-Kompositoxid mit einer Spinellstruktur und zumindest Lithium und Mangan beinhaltend, beinhaltet,
das negative Elektrodenaktivmaterial titanhaltiges anorganisches Oxid beinhaltet und
die Sekundärbatterie folgende Formel (A), Formel (B) und Formel (C) erfüllt:

Formel (A)

$$1{,}005 \leq (Ac/Aa)$$

wobei Ac eine Elektrodenfläche ($cm^2$) der positiven Elektrode ist und Aa eine Elektrodenfläche ($cm^2$) der negativen Elektrode ist;

Formel (B)

$$(Ac/Aa) < (Q_{A1}/Q_{C1})$$

wobei $Q_{C1}$ ($mAh/cm^2$) eine erste positive Elektrodenladungskapazität pro Flächeneinheit ist und $Q_{A1}$ ($mAh/cm^2$) eine erste negative Elektrodenladungskapazität pro Flächeneinheit ist; und

Formel (C)

$$0{,}90 \leq (Q_{CL}/Q_{AL}) \leq 1{,}10$$

wobei $Q_{CL}$ ($mAh/cm^2$) eine unumkehrbare Kapazität pro Flächeneinheit der positiven Elektrode ist und $Q_{AL}$

($mAh/cm^2$) eine unumkehrbare Kapazität pro Flächeneinheit der negativen Elektrode ist, wobei $Q_{CL}$ und $Q_{AL}$ unter Verwendung einer Knopfzelle mit einer Li-Metallzählerelektrode gemessen sind.

**2.** Sekundärbatterie nach Anspruch 1, wobei
(Ac/Aa) (Ac/Aa) ≤ 1,50 erfüllt.

**3.** Sekundärbatterie nach Anspruch 1 oder 2, wobei
die Lithiumeisenphosphatverbindung eine Lithiumeisenphosphatverbindung ist, die durch eine folgende (Chemische Formel 1) ausgedrückt ist:

$$\text{(Chemische Formel 1)} \qquad Li_uFe_rM1_{(1-r)}PO_4$$

wobei M1 zumindest eine Art einer Gruppe angibt, zusammengesetzt aus Kobalt (Co), Mangan (Mn), Nickel (Ni), Magnesium (Mg), Aluminium (Al), Bor (B), Titan (Ti), Vanadium (V), Niobium (Nb), Kupfer (Cu), Zink (Zn), Molybdän (Mo), Kalzium (Ca), Strontium (Sr), Wolfram (W) und Zirkonium (Zr), r ein Wert in einem Bereich $0 < r ≤ 1$ ist, u ein Wert in einem Bereich von $0,9 ≤ u ≤ 1,1$ ist, und sich wobei eine Zusammensetzung von Lithium abhängig von einem Ladungs- und Entladungszustand unterscheidet und der Wert von u einen Wert in einem vollständig entladenen Zustand angibt.

**4.** Sekundärbatterie nach Anspruch 3, wobei
die Lithiumeisenphosphatverbindung zumindest entweder $Li_uFePO_4$, wobei u gleichbedeutend mit zuvor erwähntem u ist, oder $Li_uFe_rMn_{(1-r)}PO_4$, wobei u gleichbedeutend mit zuvor erwähntem u und r gleichbedeutend mit zuvor erwähntem r ist, ist.

**5.** Sekundärbatterie nach einem der vorangehenden Ansprüche, wobei
das Lithium-Mangan-Kompositoxid ein Lithium-Mangan-Kompositoxid ist, das durch eine folgende (Chemische Formel 2) ausgedrückt ist;

$$\text{(Chemische Formel 2)} \qquad Li_vMn_{(2-w)}M2_wO_8$$

wobei M2 zumindest eine Art einer Gruppe angibt, zusammengesetzt aus Kobalt (Co), Nickel (Ni), Magnesium (Mg), Aluminium (Al), Bor (B), Titan (Ti), Vanadium (V), Chrom (Cr), Eisen (Fe), Kupfer (Cu), Zink (Zn), Molybdän (Mo), Zinn (Sn), Kalzium (Ca), Strontium (Sr) und Wolfram (W). v, w und s Werte in Bereichen von $0,9 ≤ v ≤ 1,1$, $0:5 ≤ w ≤ 0,6$ und $3,7 ≤ s ≤ 4,1$ sind und wobei sich eine Zusammensetzung von Lithium abhängig von einem Ladungs- und Entladungszustand unterscheidet und der Wert von v einen Wert in einem vollständig entladenen Zustand angibt, insbesondere, wobei
das Lithium-Mangan-Kompositoxid $Li_vMn_2O_4$ ist, wobei v gleichbedeutend mit zuvor erwähntem v ist.

**6.** Sekundärbatterie nach einem der vorangehenden Ansprüche, wobei das titanhaltige anorganische Oxid zumindest eines von titanhaltigen Lithiumkompositoxiden ist, die durch folgende (Chemische Formel 3) bis (Chemische Formel 5) und $TiO_2$ ausgedrückt sind:

$$\text{(Chemische Formel 3)} \qquad Li[Li_xM3_{(1-3x)/2}Ti_{(3+x)/2}]O_4$$

wobei M3 zumindest eine Art von Mg, Ca, Cu, Zn und Sr ist, und x $0 ≤ x ≤ 1/3$ erfüllt;

$$\text{(Chemische Formel 4)} \qquad Li[Li_yM4_{1-3y}Ti_{1+2y}]O_4$$

wobei M4 zumindest eine Art von Al, Sc, Cr, Mn, Fe, Ga und Y ist, und y $0 ≤ y ≤ 1/3$ erfüllt; und

$$\text{(Chemische Formel 5)} \qquad Li[Li_{1/3}M5_zTi_{(5/3)-z}]O_4$$

wobei M5 zumindest eine Art von V, Zr und Nb ist, und z $0 ≤ z ≤ 2/3$ erfüllt.

**7.** Sekundärbatterie nach einem der vorangehenden Ansprüche, ferner aufweisend:

ein Konfektionierungsmaterial, das ein Batterieelement zusammenpackt, das zumindest die positive Elektrode und die negative Elektrode aufweist, insbesondere mit einer laminierten Elektrodenstruktur oder einer gewickelten Elektrodenstruktur, wobei
das Konfektionierungsmaterial ein Filmkonfektionierungsmaterial ist.

8. Sekundärbatterie nach einem der vorangehenden Ansprüche, ferner aufweisend:
einen Separator, der zwischen der positiven Elektrode und der negativen Elektrode vorhanden ist.

9. Batteriepack, aufweisend:

die Sekundärbatterie nach einem der Ansprüche 1 bis 8;
eine Steuereinheit, die konfiguriert ist, die Sekundärbatterie zu steuern; und
eine Kompaktbaugruppe, die die Sekundärbatterie involviert.

10. Elektronische Vorrichtung, aufweisend:

die Sekundärbatterie nach einem der Ansprüche 1 bis 8, und
die elektronische Vorrichtung, die konfiguriert ist, eine Stromversorgung von der Sekundärbatterie zu empfangen.

11. Elektrisch angetriebenes Fahrzeug, aufweisend:

die Sekundärbatterie nach einem der Ansprüche 1 bis 8;
eine Umwandlungsvorrichtung, die konfiguriert ist, eine Stromversorgung von der Sekundärbatterie zu empfangen und den Strom in Antriebskraft eines Fahrzeugs umzuwandeln; und
eine Steuervorrichtung, die konfiguriert ist eine Informationsverarbeitung bezüglich Fahrzeugsteuerung auf der Basis von Informationen bezüglich der Sekundärbatterie auszuführen.

12. Speichervorrichtung, aufweisend:

die Sekundärbatterie nach einem der Ansprüche 1 bis 8, und
die Speichervorrichtung, die konfiguriert ist, eine elektrische Vorrichtung, die mit der Sekundärbatterie verbunden ist, mit Strom zu versorgen.

13. Speichervorrichtung nach Anspruch 12, ferner aufweisend:

eine Strominformationssteuervorrichtung, die konfiguriert ist, ein Signal zu/von einer anderen Vorrichtung durch ein Netzwerk zu senden/empfangen, und
die Speichervorrichtung, die eine Ladungs- und Entladungssteuerung der Sekundärbatterie auf der Basis von Informationen, die durch die Strominformationssteuervorrichtung empfangen werden, ausführt.

14. Stromsystem, wobei
Strom von der Sekundärbatterie nach einem der Ansprüche 1 bis 8 zugeleitet wird, oder Strom von einer Stromerzeugungsvorrichtung oder einem Stromnetz der Sekundärbatterie zugeleitet wird.

**Revendications**

1. Batterie secondaire comprenant :

une électrode positive comprenant une couche de matière active d'électrode positive renfermant une matière active d'électrode positive ;
une électrode négative comprenant une couche de matière active d'électrode négative renfermant une matière active d'électrode négative ; et
un électrolyte,
dans laquelle
la matière active d'électrode positive contient au moins soit un composé phosphate de fer et de lithium ayant une structure olivine et contenant au moins du lithium, du fer et du phosphore, soit un oxyde composite de lithium-manganèse ayant une structure spinelle et contenant au moins du lithium et du manganèse,
la matière active d'électrode négative contient un oxyde inorganique contenant du titane et

la batterie secondaire satisfait à la formule (A), la formule (B) et la formule (C) ci-dessous :

## Formule (A)

$$1,005 \leq (Ac/Aa)$$

dans laquelle Ac est une surface d'électrode ($cm^2$) de l'électrode positive et Aa est une surface d'électrode ($cm^2$) de l'électrode négative ;

## Formule (B)

$$(Ac/Aa) < (Q_{A1}/Q_{C1})$$

dans laquelle $Q_{C1}$ ($mAh/cm^2$) est une première capacité de charge d'électrode positive par unité de surface et $Q_{A1}$ ($mAh/cm^2$) est une première capacité de charge d'électrode négative par unité de surface ; et

## Formule (C)

$$0,90 \leq (Q_{CL}/Q_{AL}) \leq 1,10$$

dans laquelle $Q_{CL}$ ($mAh/cm^2$) est une capacité irréversible par unité de surface de l'électrode positive et $Q_{AL}$ ($mAh/cm^2$) est une capacité irréversible par unité de surface de l'électrode négative, $Q_{CL}$ et $Q_{AL}$ étant mesurées à l'aide d'une pile bouton ayant une contre-électrode en Li métallique.

2. Batterie secondaire selon la revendication 1, dans laquelle
le rapport (Ac/Aa) satisfait à la relation (Ac/Aa) $\leq$ 1,50.

3. Batterie secondaire selon la revendication 1 ou 2, dans laquelle
le composé phosphate de fer et de lithium est un composé phosphate de fer et de lithium représenté par une (Formule chimique 1) suivante :

(Formule chimique 1)　　　$Li_uFe_rM1_{(1-r)}PO_4$

dans laquelle M1 représente au moins un élément d'un groupe composé par le cobalt (Co), le manganèse (Mn), le nickel (Ni), le magnésium (Mg), l'aluminium (Al), le bore (B), le titane (Ti), le vanadium (V), le niobium (Nb), le cuivre (Cu), le zinc (Zn), le molybdène (Mo), le calcium (Ca), le strontium (Sr), le tungstène (W) et le zirconium (Zr), r est une valeur dans une plage de 0 < r $\leq$ 1, u est une valeur dans une plage de 0,9 $\leq$ u $\leq$ 1,1 et dans laquelle une composition de lithium diffère en fonction d'un état de charge et de décharge et la valeur de u représente une valeur dans un état complètement déchargé.

4. Batterie secondaire selon la revendication 3, dans laquelle
le composé phosphate de fer et de lithium est au moins soit $Li_uFePO_4$, u étant synonyme du u susmentionné, soit $Li_uFe_rMn_{(1-r)}PO_4$, u étant synonyme du u susmentionné et r étant synonyme du r susmentionné.

5. Batterie secondaire selon une quelconque revendication précédente, dans laquelle
l'oxyde composite de lithium-manganèse est un oxyde composite de lithium-manganèse représenté par une (Formule chimique 2) suivante :

(Formule chimique 2)　　　$Li_vMn_{(2-w)}M2_wO_s$

dans laquelle M2 représente au moins un élément d'un groupe composé par le cobalt (Co), le nickel (Ni), le magnésium (Mg), l'aluminium (Al), le bore (B), le titane (Ti), le vanadium (V), le chrome (Cr), le fer (Fe), le cuivre (Cu), le zinc (Zn), le molybdène (Mo), l'étain (Sn), le calcium (Ca), le strontium (Sr) et le tungstène (W), v, w et s sont des valeurs dans les plages de 0,9 $\leq$ v $\leq$ 1,1, 0 $\leq$ w $\leq$ 0,6 et 3,7 $\leq$ s $\leq$ 4,1 et dans laquelle une composition de lithium diffère en fonction d'un état de charge et de décharge et la valeur de v représente une valeur dans un état complètement déchargé, en particulier dans laquelle
l'oxyde composite de lithium-manganèse est $Li_vMn_2O_4$, v étant synonyme du v susmentionné.

**6.** Batterie secondaire selon une quelconque revendication précédente, dans laquelle
l'oxyde inorganique contenant du titane est au moins l'un des oxydes composites de lithium contenant du titane représentés par la (Formule chimique 3) à la (Formule chimique 5) suivantes et de $TiO_2$ :

(Formule chimique 3)  $Li[Li_x M3_{(1-3x)/2} Ti_{(3+x)/2}]O_4$

dans laquelle M3 est au moins un élément parmi Mg, Ca, Cu, Zn et Sr et x satisfait à la relation $0 \leq x \leq 1/3$ ;

(Formule chimique 4)  $Li[Li_y M4_{1-3y} Ti_{1+2y}]O_4$

dans laquelle M4 est au moins un élément parmi Al, Sc, Cr, Mn, Fe, Ga et Y et y satisfait à la relation $0 \leq y \leq 1/3$ ; et

(Formule chimique 5)  $Li[Li_{1/3} M5_z Ti_{(5/3)-z}]O_4$

dans laquelle M5 est au moins un élément parmi V, Zr et Nb et z satisfait à la relation $0 \leq z \leq 2/3$.

**7.** Batterie secondaire selon une quelconque revendication précédente, comprenant en outre :

un matériau d'encapsulation qui encapsule un élément de batterie comprenant au moins l'électrode positive et l'électrode négative, en particulier ayant une structure d'électrodes stratifiées ou une structure d'électrodes enroulées, dans laquelle
le matériau d'encapsulation est un matériau d'encapsulation en film.

**8.** Batterie secondaire selon une quelconque revendication précédente, comprenant en outre :
un séparateur disposé entre l'électrode positive et l'électrode négative.

**9.** Bloc-batterie comprenant :

la batterie secondaire selon l'une quelconque des revendications 1 à 8 ;
une unité de commande conçue pour commander la batterie secondaire ; et
un boîtier qui englobe la batterie secondaire.

**10.** Dispositif électronique comprenant :

la batterie secondaire selon l'une quelconque des revendications 1 à 8 et
le dispositif électronique étant conçu pour recevoir une alimentation en énergie électrique provenant de la batterie secondaire.

**11.** Véhicule électrique comprenant :

la batterie secondaire selon l'une quelconque des revendications 1 à 8 ;
un dispositif de conversion conçu pour recevoir une alimentation en énergie électrique provenant de la batterie secondaire et convertir l'énergie électrique en force motrice d'un véhicule ; et
un dispositif de commande conçu pour effectuer un traitement d'informations concernant la commande du véhicule sur la base d'informations concernant la batterie secondaire.

**12.** Dispositif accumulateur comprenant :

la batterie secondaire selon l'une quelconque des revendications 1 à 8 et
le dispositif accumulateur étant conçu pour fournir de l'énergie électrique à un dispositif électronique connecté à la batterie secondaire.

**13.** Dispositif accumulateur selon la revendication 12, comprenant en outre :

un dispositif de gestion d'informations sur l'énergie électrique conçu pour transmettre un signal à un autre dispositif/ recevoir un signal d'un autre dispositif grâce à un réseau et
le dispositif accumulateur effectuant une commande de charge et de décharge de la batterie secondaire sur la base d'informations reçues par le dispositif de gestion d'informations sur l'énergie électrique.

**14.** Système électrique, dans lequel
de l'énergie électrique est fournie à partir de la batterie secondaire selon l'une quelconque des revendications 1 à 8 ou de l'énergie électrique est fournie à la batterie secondaire à partir d'un dispositif de production d'énergie électrique ou d'un secteur.

# FIG. 1

A

C

# FIG. 2

# FIG. 3

A

4

Wc · Dc

4A

4B

4C

B

5

Wa · Da

5A · 5B

5C

# FIG. 4

FIG. 5

# FIG. 6

# FIG. 7

A

$\underline{4}$

Wc

Dc

4

4A

4B

4C

B

$\underline{5}$

Wa

Da

5

5A

5B

5C

# FIG. 8

# FIG. 9

POSITIVE
ELECTRODE
54

NEGATIVE
ELECTRODE
55

POSITIVE
ELECTRODE
CURRENT
COLLECTOR
54A

POSITIVE
ELECTRODE
ACTIVE
MATERIAL
LAYER
54B

NEGATIVE
ELECTRODE
CURRENT
COLLECTOR
55A

NEGATIVE
ELECTRODE
ACTIVE
MATERIAL
LAYER
55B

ELECTROLYTE
LAYER
57

SEPARATOR
56

PROTECTIVE
TAPE
58

50

52      53

# FIG. 10

POSITIVE ELECTRODE LEAD
95

BATTERY LID
84

DISK PLATE
85A

85 SAFETY VALVE MECHANISM

86 THERMOSENSITIVE RESISTANCE ELEMENT

87 GASKET

82 INSULATING PLATE

81 BATTERY CAN

90 WOUND ELECTRODE BODY

91 POSITIVE ELECTRODE

92 NEGATIVE ELECTRODE

93 SEPARATOR

94 CENTER PIN

83 INSULATING PLATE

96 NEGATIVE ELECTRODE LEAD

# FIG. 11

91

92

90

91A    91B    92A    92B    93

FIG. 12

# FIG. 13

A

101

103a

106

103b

103c

B

101

103a

103c

# FIG. 14

POSITIVE ELECTRODE TERMINAL 321

CHARGE CONTROL SWITCH 302a

DIODE 302b

DIODE 303b

DISCHARGE CONTROL SWITCH 303a

SWITCH UNIT 304

CO

DO

SWITCH CONTROL UNIT 314

ASSEMBLED BATTERY 301

MEMORY 317

CONTROL UNIT

VOLTAGE DETECTION UNIT

308 TEMPERATURE DETECTION ELEMENT

CURRENT MEASUREMENT UNIT

TEMPERATURE DETECTION UNIT

313   307   310   318   311   301a

NEGATIVE ELECTRODE TERMINAL 322

CURRENT DETECTION RESISTANCE

SECONDARY BATTERY

EP 3 128 594 B1

## FIG. 15

402 CENTRALIZED POWER SYSTEM
- THERMAL POWER GENERATION 402a
- ATOMIC POWER GENERATION 402b
- HYDRAULIC POWER GENERATION 402c

406 ELECTRICALLY DRIVEN VEHICLE
- ELECTRIC CAR 406a
- HYBRID CAR 406b
- ELECTRIC MOTORCYCLE 406c

401 HOUSE
404 POWER GENERATION DEVICE

POWER NETWORK 409
INFORMATION NETWORK 412

SMART METER 407
POWER HUB 408
CONTROL DEVICE 410
STORAGE DEVICE 403
SERVER 413
STORAGE SYSTEM 400

VARIOUS SENSORS 411

405 POWER CONSUMING DEVICES
- REFRIGERATOR 405a
- AIR CONDITIONER 405b
- TELEVISION 405c
- BATH 405d

# FIG. 16

EP 3 128 594 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011091039 A
- JP 2011113961 A
- JP 5191232 B
- JP 2013016522 A
- WO 2011145301 A